# EUROPEAN PATENT APPLICATION

(11) **EP 3 448 085 A1**
(43) Date of publication of application: **27.02.2019**
(21) Application number: 16901323.2
(22) Date of filing: 13.05.2016
(51) Int. Cl.: H04W 28/22

(54) **METHOD AND DEVICE FOR ADJUSTING CODING RATE**

(71) Applicant: Huawei Technologies Co., Ltd., Longgang Shenzhen, Guangdong 518129 (CN)
(72) Inventor: LIU, Jing, Shenzhen Guangdong 518129 (CN); GUO, Yi, Shenzhen Guangdong 518129 (CN)
(74) Representative: Goddar, Heinz J.
(86) International application number: PCT/CN2016/082011
(87) International publication number: WO 2017/193368

(57) **Abstract**

Embodiments of the present invention disclose a method and an apparatus for adjusting an encoding rate. The method includes: receiving, by a first terminal device, a message requesting an adjustment in a first uplink encoding rate and sent by a second terminal device, where the message requesting an adjustment in a first uplink encoding rate carries a first encoding rate, and the second terminal device is a peer device communicating with the first terminal device; and when the first terminal device determines that the first encoding rate is greater than an uplink encoding rate currently used by the first terminal device, sending, by the first terminal device, a consulting message to a first network device, where the consulting message carries the first encoding rate, and the first terminal device is within a coverage area of the first network device. According to the method and the apparatus for adjusting an encoding rate in the embodiments of the present invention, a problem of frequent increase and decrease of an encoding rate can be avoided, thereby reducing signaling overheads and improving user experience.

## Description

### TECHNICAL FIELD

Embodiments of the present invention relate to the communications field, and more specifically, to a method and an apparatus for adjusting an encoding rate.

### BACKGROUND

In a wireless voice transmission process, to meet a bandwidth limitation and a distance requirement, voice data information needs to be compressed, to be specific, data needs to be encoded to convert an analog signal into a digital signal. With development of mobile communications, there is an increasingly higher requirement on voice compression and encoding. This not only requires a lower encoding rate for increasing a system capacity, but also requires higher synthetic voice quality to ensure call quality. Therefore, an encoding rate of a transmitter needs to be adjusted based on a current network status, to provide a voice service of higher quality and make system resources fully used.

In the prior art, a network device may adjust an encoding rate of a terminal device based on a current network status, for example, based on whether network congestion occurs currently or whether link quality is sufficiently good. To be specific, if finding that the current network status is relatively poor, the network device notifies the terminal device to reduce a rate; or if finding that the current network status is relatively good, the network device notifies the terminal device to increase a rate. In voice services of some systems, for example, a Long Term Evolution (Long Term Evolution, "LTE" for short) system, a transmit end and a receive end use a same rate to perform encoding and decoding. Therefore, when receiving a network congestion instruction sent by a network device to which the receive end belongs, the receive end directly performs a rate-reducing adjustment on an encoding rate or notifies the transmit end to perform a rate-reducing adjustment on an encoding rate; otherwise, the receive end directly performs a rate-increase adjustment on an encoding rate or notifies the transmit end to perform a rate-increase adjustment on an encoding rate.

However, in the prior art, the rate adjustment of the terminal device considers only a link status of a single-side network. When not receiving a network congestion instruction, the terminal device directly performs the rate-increase adjustment on the encoding rate without comprehensively considering link statuses of the two parities during the communication. As a result, the encoding rate obtained through adjustment by the terminal device is not allowed by the peer end, and the encoding rate is frequently increased and reduced, affecting user experience.

### SUMMARY

In view of this, embodiments of the present invention provide a method and an apparatus for adjusting an encoding rate, to avoid a problem of frequent increase and decrease of an encoding rate, thereby reducing signaling overheads and improving user experience.

According to a first aspect, a method for adjusting an encoding rate is provided. The method for adjusting an encoding rate includes: receiving, by a first terminal device, a message requesting an adjustment in a first uplink encoding rate and sent by a second terminal device, where the message requesting an adjustment in a first uplink encoding rate is used to trigger the first terminal device to adjust an uplink encoding rate, the message requesting an adjustment in a first uplink encoding rate carries a first encoding rate, and the second terminal device is a peer device communicating with the first terminal device; and when the first terminal device determines that the first encoding rate is greater than an uplink encoding rate currently used by the first terminal device, sending, by the first terminal device, a consulting message to a first network device, where the consulting message is used to trigger a negotiation of an adjustment in an encoding rate with the first network device, the consulting message carries the first encoding rate, and the first terminal device is within a coverage area of the first network device.

In this way, when determining a rate-increase request of the second terminal device based on the received first encoding rate, the first terminal device does not perform the rate-increase adjustment on the encoding rate immediately, but negotiates with the first network device of the local end and comprehensively considers the network statuses of the local link and the peer link before determining whether the rate-increase adjustment needs to be performed on the encoding rate. In this way, a problem of frequent increase and decrease of the encoding rate can be avoided, thereby reducing signaling overheads and improving user experience.

In a first possible implementation of the first aspect, after the sending, by the first terminal device, a consulting message to a first network device, the method further includes: receiving, by the first terminal device, a response message sent by the first network device, where the response message carries a reference encoding rate allowed to be adjusted by the first network device; and determining, by the first terminal device based on the response message, whether a rate-increase adjustment needs to be performed on an encoding rate.

Specifically, the first terminal device may receive the reference encoding rate sent by the first network device, and determine, based on the reference encoding rate, whether a rate-increase adjustment needs to be performed on an encoding rate.

With reference to the foregoing possible implementation of the first aspect, in a second possible implementation of the first aspect, the message requesting an adjustment in a first uplink encoding rate is an Implementation Control Protocol RTCP message or a Real-time Transport Protocol-Codec Mode Request RTP CMR message.

With reference to the foregoing possible implementation of the first aspect, in a third possible implementation of the first aspect, the consulting message is a Radio Resource Control RRC message or a layer 2 control message, for example, a Media Access Control-Control Element MAC CE message.

In some aspects in the embodiments of the present invention, after the first terminal device receives the message requesting an adjustment in a first uplink encoding rate and sent by the second terminal device, the first terminal device may determine, based on a measurement result of the first terminal device, whether to accept the first encoding rate carried in the message requesting an adjustment in a first uplink encoding rate, and determines a reference encoding rate allowed to be adjusted by the first terminal device.

Optionally, if accepting the first encoding rate, the first terminal device determines the first encoding rate as the reference encoding rate; or if not accepting the first encoding rate, the first terminal device determines a maximum encoding rate allowed by the first terminal device as the reference encoding rate.

According to a second aspect, a method for adjusting an encoding rate is provided. The method for adjusting an encoding rate includes: receiving, by a first network device, a consulting message sent by a first terminal device, where the consulting message carries a first encoding rate requested by a second terminal device that communicates with the first terminal device, the first encoding rate is greater than an uplink encoding rate currently used by the first terminal device, the first terminal device is within a coverage area of the first network device, and the second terminal device is a peer device communicating with the first terminal device; and determining, by the first network device based on a current network status and the first encoding rate, a reference encoding rate allowed to be adjusted by the first network device.

In this way, after receiving the consulting message sent by the first terminal device, the first network device comprehensively considers a network status of the first network device and an encoding rate carried in the consulting message, to determine the reference encoding rate allowed to be adjusted. Therefore, the reference encoding rate is determined by comprehensively considering the network statuses of the local link and the peer link, to provide a reference for the first terminal device, so that a problem of frequent increase and decrease of the encoding rate can be avoided, thereby reducing signaling overheads and improving user experience.

In a first possible implementation of the second aspect, the determining, by the first network device based on a current network status and the first encoding rate, a reference encoding rate allowed to be adjusted by the first network device includes: if the first network device determines, based on the current network status, to accept the first encoding rate, determining, by the first network device, the first encoding rate as the reference encoding rate; or if the first network device determines, based on the current network status, not to accept the first encoding rate, determining, by the first network device, an allowed maximum encoding rate as the reference encoding rate.

With reference to the foregoing possible implementation of the second aspect, in a second possible implementation of the second aspect, after the determining, by the first network device based on a current network status and the first encoding rate, a reference encoding rate allowed to be adjusted by the first network device, the method further includes: sending, by the first network device, a response message to the first terminal device, where the response message carries the reference encoding rate.

With reference to the foregoing possible implementation of the second aspect, in a third possible implementation of the second aspect, the consulting message is a Radio Resource Control RRC message or a layer 2 control message, for example, a Media Access Control-Control Element MAC CE message.

According to a third aspect, a method for adjusting an encoding rate is provided. The method for adjusting an encoding rate includes: receiving, by a first terminal device, a message requesting an adjustment in a first uplink encoding rate and sent by a first network device based on a current network status, where the message requesting an adjustment in a first uplink encoding rate is used to trigger the first terminal device to adjust an uplink encoding rate, the message requesting an adjustment in a first encoding rate carries a first encoding rate, and the first terminal device is within a coverage area of the first network device; and when the first terminal device determines that the first encoding rate is greater than an uplink encoding rate currently used by the first terminal device, sending, by the first terminal device, a consulting message to the second terminal device, where the consulting message is used to trigger a negotiation of an adjustment in the uplink encoding rate with the second terminal device, the consulting message carries the first encoding rate, and the second terminal device is a peer device communicating with the first terminal device.

In this way, when determining a rate-increase request of the first network device based on the received encoding rate, the first terminal device does not perform the rate-increase adjustment on the encoding rate immediately, but negotiates with the peer end during the communication, that is, the second terminal device and comprehensively considers the network statuses of the local link and the peer link before determining whether the rate-increase adjustment needs to be performed on the encoding rate. In this way, a problem of frequent increase and decrease of the encoding rate can be avoided, thereby reducing signaling overheads and improving user experience.

In a first possible implementation of the third aspect, after the sending, by the first terminal device, a consulting message to the second terminal device, the method further includes: receiving, by the first terminal device, a response message sent by the second terminal device, where the response message carries a reference encoding rate allowed to be adjusted by the second terminal device; and determining, by the first terminal device based on the response message, whether a rate-increase adjustment needs to be performed on an encoding rate.

With reference to the foregoing possible implementation of the third aspect, in a second possible implementation of the third aspect, the message requesting an adjustment in a first uplink encoding rate is a Radio Resource Control RRC message or a layer 2 control message, for example, a Media Access Control-Control Element MAC CE message.

With reference to the foregoing possible implementation of the third aspect, in a third possible implementation of the third aspect, the consulting message is an Implementation Control Protocol RTCP message or a Real-time Transport Protocol-Codec Mode Request RTP CMR message.

According to a fourth aspect, a method for adjusting an encoding rate is provided. The method for adjusting an encoding rate includes: receiving, by a first terminal device, a first encoding rate sent by a first network device, where the first terminal device is within a coverage area of the first network device; receiving, by the first terminal device, a second encoding rate sent by a second terminal device, where the second terminal device is a peer device communicating with the first terminal device; and determining, by the first terminal device based on the first encoding rate and the second encoding rate, whether a rate-increase adjustment needs to be performed on an encoding rate.

Optionally, the receiving, by a first terminal device, a first encoding rate sent by a first network device includes:
receiving, by the first terminal device, a message requesting an adjustment in a first uplink encoding rate and sent by the first network device, where the message requesting an adjustment in a first uplink encoding rate is used to trigger the first terminal device to adjust an uplink encoding rate, and the message requesting an adjustment in a first uplink encoding rate carries the first encoding rate.

Optionally, the receiving, by the first terminal device, a second encoding rate sent by a second terminal device includes:
receiving, by the first terminal device, a message requesting an adjustment in a second uplink encoding rate and sent by the second terminal device, where the message requesting an adjustment in a second uplink encoding rate is used to trigger the first terminal device to adjust an uplink encoding rate, and the message requesting an adjustment in a second uplink encoding rate carries the second encoding rate.

Therefore, according to the method for adjusting an encoding rate in the embodiments of the present invention, the network statuses of the local link and the peer link are comprehensively considered, and the first encoding rate corresponding to the status of the local link and the second encoding rate corresponding to the status of the peer link are received, to determine whether the rate-increase adjustment needs to be performed on the encoding rate. In this way, a problem of frequent increase and decrease of the encoding rate can be avoided, thereby reducing signaling overheads and improving user experience.

In a first possible implementation of the fourth aspect, the receiving, by a first terminal device, a first encoding rate sent by a first network device includes: receiving, by the first terminal device, the first encoding rate sent by the first network device by using a Radio Resource Control RRC message or a broadcast message, where the first encoding rate is a maximum value of the encoding rate that is determined by the first network device based on a network loading status and that is acceptable for the first network device; and the determining, by the first terminal device based on the first encoding rate and the second encoding rate, whether a rate-increase adjustment needs to be performed on an encoding rate includes: after the first terminal device receives the second encoding rate sent by the second terminal device, if the first terminal device determines that the second encoding rate is greater than an uplink encoding rate currently used by the first terminal device, comparing, by the first terminal device, the second encoding rate with the first encoding rate; or if the second encoding rate is less than or equal to the first encoding rate, determining, by the first terminal device, to perform the rate-increase adjustment on the encoding rate.

With reference to the foregoing possible implementation of the fourth aspect, in a second possible implementation of the fourth aspect, the determining, by the first terminal device based on the first encoding rate and the second encoding rate, whether a rate-increase adjustment needs to be performed on an encoding rate further includes: if the second encoding rate is greater than the first encoding rate, rejecting, by the first terminal device, to perform the rate-increase adjustment on the encoding rate.

Specifically, the first network device may preset a rate threshold, that is, a maximum encoding rate for the first terminal device based on a network status of the first network device, for example, a network loading status. In this way, when receiving the second encoding rate, the first terminal device compares the second encoding rate with the maximum encoding rate once finding that the second encoding rate is greater than a currently used encoding rate, to determine whether the rate-increase adjustment needs to be performed on the encoding rate, thereby reducing signaling overheads and improving user experience.

With reference to the foregoing possible implementation of the fourth aspect, in a third possible implementation of the fourth aspect, the receiving, by the first terminal device, a second encoding rate sent by a second terminal device includes: receiving, by the first terminal device during last communication, a message requesting an adjustment in an uplink encoding rate and sent by the second terminal device, where the message requesting an adjustment in an uplink encoding rate carries the second encoding rate; and storing, by the first terminal device, the second encoding rate; and the determining, by the first terminal device based on the first encoding rate and the second encoding rate, whether a rate-increase adjustment needs to be performed on an encoding rate includes: after the first terminal device receives the first encoding rate sent by the first network device, if the first terminal device determines that the first encoding rate is greater than an uplink encoding rate currently used by the first terminal device, comparing, by the first terminal device, the first encoding rate with the second encoding rate; or if the first encoding rate is less than or equal to the second encoding rate, determining, by the first terminal device, to perform the rate-increase adjustment on the encoding rate.

With reference to the foregoing possible implementation of the fourth aspect, in a fourth possible implementation of the fourth aspect, the determining, by the first terminal device based on the first encoding rate and the second encoding rate, whether a rate-increase adjustment needs to be performed on an encoding rate further includes: if the first encoding rate is greater than the second encoding rate, rejecting, by the first terminal device, to perform the rate-increase adjustment on the encoding rate.

Specifically, the first network device may store an encoding rate sent by the second terminal device during the last communication process, and uses the encoding rate as the second encoding rate. When receiving the first encoding rate sent by the first network device, the first terminal device compares the first encoding rate with the stored second encoding rate once finding that the first encoding rate is greater than a currently used uplink encoding rate, to determine whether the rate-increase adjustment needs to be performed on the encoding rate, thereby reducing signaling overheads and improving user experience.

With reference to the foregoing possible implementation of the fourth aspect, in a fifth possible implementation of the fourth aspect, the method further includes: if the first terminal device receives the first encoding rate first, when receiving the message requesting an adjustment in a first uplink encoding rate, comparing, by the first terminal device, the first encoding rate with an uplink encoding rate currently used by the first terminal device; and if the first encoding rate is greater than the uplink encoding rate currently used by the first terminal device, starting, by the first terminal device, a timer, and waiting, before the timer expires, for the message requesting an adjustment in a second uplink encoding rate; and the determining, by the first terminal device based on the first encoding rate and the second encoding rate, whether a rate-increase adjustment needs to be performed on an encoding rate includes: if the first terminal device receives the second encoding rate before the timer expires, determining, by the first terminal device based on the first encoding rate and the second encoding rate, whether the rate-increase adjustment needs to be performed on the encoding rate.

With reference to the foregoing possible implementation of the fourth aspect, in a sixth possible implementation of the fourth aspect, the determining, by the first terminal device based on the first encoding rate and the second encoding rate, whether a rate-increase adjustment needs to be performed on an encoding rate further includes: if the first terminal device does not receive the second encoding rate before the timer expires, rejecting, by the first terminal device, to perform the rate-increase adjustment on the encoding rate.

With reference to the foregoing possible implementation of the fourth aspect, in a seventh possible implementation of the fourth aspect, the method further includes: if the first terminal device receives the second encoding rate first, when receiving the second encoding rate, comparing, by the first terminal device, the second encoding rate with an uplink encoding rate currently used by the first terminal device; and if the second encoding rate is greater than the uplink encoding rate currently used by the first terminal device, starting, by the first terminal device, a timer, and waiting for the first encoding rate before the timer expires; and the determining, by the first terminal device based on the first encoding rate and the second encoding rate, whether a rate-increase adjustment needs to be performed on an encoding rate includes: if the first terminal device receives the first encoding rate before the timer expires, determining, by the first terminal device based on the first encoding rate and the second encoding rate, whether the rate-increase adjustment needs to be performed on the encoding rate.

With reference to the foregoing possible implementation of the fourth aspect, in an eighth possible implementation of the fourth aspect, the determining, by the first terminal device based on the first encoding rate and the second encoding rate, whether a rate-increase adjustment needs to be performed on an encoding rate further includes: if the first terminal device does not receive the first encoding rate before the timer expires, rejecting, by the first terminal device, to perform the rate-increase adjustment on the encoding rate.

With reference to the foregoing possible implementation of the fourth aspect, in a ninth possible implementation of the fourth aspect, after the determining, by the first terminal device based on the first encoding rate and the second encoding rate, whether a rate-increase adjustment needs to be performed on an encoding rate, the method further includes: performing, by the first terminal device, the rate-increase adjustment on the encoding rate; or sending, by the first terminal device, a response message to the second terminal device, where the response message carries a reference encoding rate allowed by the first terminal device.

With reference to the foregoing possible implementation of the fourth aspect, in a tenth possible implementation of the fourth aspect, the first encoding rate is carried in a Radio Resource Control RRC message or a layer 2 control message, for example, a Media Access Control-Control Element MAC CE message.

With reference to the foregoing possible implementation of the fourth aspect, in an eleventh possible implementation of the fourth aspect, the second encoding rate is carried in an Implementation Control Protocol RTCP message or a Real-time Transport Protocol-Codec Mode Request RTP CMR message.

In some aspects of the embodiments of the present invention, optionally, if the first terminal device first receives the first encoding rate sent by the first network device and determines that the first network device requests rate increase, after the first terminal device receives the first encoding rate sent by the first network device, the first terminal device sends a consulting message to the second terminal device, where the consulting message is used to perform a negotiation of an adjustment in the encoding rate with the second terminal device.

The receiving, by the first terminal device, a second encoding rate sent by a second terminal device includes: receiving, by the first terminal device, the second encoding rate sent by the second terminal device after the second terminal device receives the consulting message.

Optionally, if the first terminal device first receives the second encoding rate sent by the second terminal device and determines that the second terminal device requests rate increase, after the first terminal device receives the second encoding rate sent by the second terminal device, the first terminal device sends a consulting message to the first network device, where the consulting message is used to perform a negotiation of an adjustment in the encoding rate with the first network device.

The receiving, by a first terminal device, a first encoding rate sent by a first network device includes: receiving, by the first terminal device, the first encoding rate sent by the first network device after the first network device receives the consulting message.

Specifically, after receiving the first encoding rate (or the second encoding rate), the first terminal device may actively request the second encoding rate from the peer device (or request the first encoding rate from a network device to which the first terminal device belongs) without additional waiting, so that time can be saved for the user, thereby improving user experience.

According to a fifth aspect, an apparatus for adjusting an encoding rate is provided. The apparatus for adjusting an encoding rate is configured to perform the method according to any one of the first aspect or the possible implementations of the first aspect. Specifically, the apparatus may include units configured to perform the method according to any one of the first aspect or the possible implementations of the first aspect.

According to a sixth aspect, an apparatus for adjusting an encoding rate is provided. The apparatus for adjusting an encoding rate is configured to perform the method according to any one of the second aspect or the possible implementations of the second aspect. Specifically, the apparatus may include units configured to perform the method according to any one of the second aspect or the possible implementations of the second aspect.

According to a seventh aspect, an apparatus for adjusting an encoding rate is provided. The apparatus for adjusting an encoding rate is configured to perform the method according to any one of the third aspect or the possible implementations of the third aspect. Specifically, the apparatus may include units configured to perform the method according to any one of the third aspect or the possible implementations of the third aspect.

According to an eighth aspect, an apparatus for adjusting an encoding rate is provided. The apparatus for adjusting an encoding rate is configured to perform the method according to any one of the fourth aspect or the possible implementations of the fourth aspect. Specifically, the apparatus may include units configured to perform the method according to any one of the fourth aspect or the possible implementations of the fourth aspect.

According to a ninth aspect, an apparatus for adjusting an encoding rate is provided. The apparatus includes: a receiver, a transmitter, a memory, a processor, and a bus system. The receiver, the transmitter, the memory, and the processor are connected to each other by using the bus system. The memory is configured to store an instruction. The processor is configured to execute the instruction stored in the memory, to control the receiver to receive a signal and control the transmitter to send a signal. In addition, when the processor executes the instruction stored in the memory, the execution causes the processor to perform the method according to any one of the first aspect or the possible implementations of the first aspect.

According to a tenth aspect, an apparatus for adjusting an encoding rate is provided. The apparatus includes: a receiver, a transmitter, a memory, a processor, and a bus system. The receiver, the transmitter, the memory, and the processor are connected to each other by using the bus system. The memory is configured to store an instruction. The processor is configured to execute the instruction stored in the memory, to control the receiver to receive a signal and control the transmitter to send a signal. In addition, when the processor executes the instruction stored in the memory, the execution causes the processor to perform the method according to any one of the second aspect or the possible implementations of the second aspect.

According to an eleventh aspect, an apparatus for adjusting an encoding rate is provided. The apparatus includes: a receiver, a transmitter, a memory, a processor, and a bus system. The receiver, the transmitter, the memory, and the processor are connected to each other by using the bus system. The memory is configured to store an instruction. The processor is configured to execute the instruction stored in the memory, to control the receiver to receive a signal and control the transmitter to send a signal. In addition, when the processor executes the instruction stored in the memory, the execution causes the processor to perform the method according to any one of the third aspect or the possible implementations of the third aspect.

According to a twelfth aspect, an apparatus for adjusting an encoding rate is provided. The apparatus includes: a receiver, a transmitter, a memory, a processor, and a bus system. The receiver, the transmitter, the memory, and the processor are connected to each other by using the bus system. The memory is configured to store an instruction. The processor is configured to execute the instruction stored in the memory, to control the receiver to receive a signal and control the transmitter to send a signal. In addition, when the processor executes the instruction stored in the memory, the execution causes the processor to perform the method according to any one of the fourth aspect or the possible implementations of the fourth aspect.

According to a thirteenth aspect, a system for adjusting an encoding rate is provided. The system includes the apparatus according to any one of the fifth aspect or the possible implementations of the fifth aspect and the apparatus according to any one of the sixth aspect or the possible implementations of the sixth aspect; or
the system includes the apparatus according to any one of the sixth aspect or the possible implementations of the sixth aspect and the apparatus according to any one of the seventh aspect or the possible implementations of the seventh aspect; or
the system includes the apparatus according to any one of the ninth aspect or the possible implementations of the ninth aspect and the apparatus according to any one of the tenth aspect or the possible implementations of the tenth aspect; or
the system includes the apparatus according to any one of the tenth aspect or the possible implementations of the tenth aspect and the apparatus according to any one of the eleventh aspect or the possible implementations of the eleventh aspect.

According to a fourteenth aspect, a computer-readable medium is provided, configured to store a computer program, where the computer program includes an instruction used to perform the method according to any one of the first aspect or the possible implementations of the first aspect.

According to a fifteenth aspect, a computer-readable medium is provided, configured to store a computer program, where the computer program includes an instruction used to perform the method according to any one of the second aspect or the possible implementations of the second aspect.

According to a sixteenth aspect, a computer-readable medium is provided, configured to store a computer program, where the computer program includes an instruction used to perform the method according to any one of the third aspect or the possible implementations of the third aspect.

According to a seventeenth aspect, a computer-readable medium is provided, configured to store a computer program, where the computer program includes an instruction used to perform the method according to any one of the fourth aspect or the possible implementations of the fourth aspect.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and persons of ordinary skill in the art may still derive other drawings from these accompanying drawings without creative efforts.
FIG. 1 is a schematic diagram of a communications system applied in an embodiment of the present invention;
FIG. 2 is a schematic block diagram of a method for adjusting an encoding rate according to an embodiment of the present invention;
FIG. 3 is a schematic block diagram of another method for adjusting an encoding rate according to an embodiment of the present invention;
FIG. 4 is a schematic block diagram of another method for adjusting an encoding rate according to an embodiment of the present invention;
FIG. 5 is a schematic block diagram of another method for adjusting an encoding rate according to an embodiment of the present invention;
FIG. 6 is a schematic flowchart of another method for adjusting an encoding rate according to an embodiment of the present invention;
FIG. 7 is a schematic flowchart of another method for adjusting an encoding rate according to an embodiment of the present invention;
FIG. 8 is a schematic flowchart of another method for adjusting an encoding rate according to an embodiment of the present invention;
FIG. 9 is a schematic flowchart of another method for adjusting an encoding rate according to an embodiment of the present invention;
FIG. 10 is a schematic flowchart of another method for adjusting an encoding rate according to an embodiment of the present invention;
FIG. 11 is a schematic flowchart of another method for adjusting an encoding rate according to an embodiment of the present invention;
FIG. 12 is a schematic block diagram of an apparatus for adjusting an encoding rate according to an embodiment of the present invention;
FIG. 13 is a schematic block diagram of another apparatus for adjusting an encoding rate according to an embodiment of the present invention;
FIG. 14 is a schematic block diagram of another apparatus for adjusting an encoding rate according to an embodiment of the present invention;
FIG. 15 is a schematic block diagram of another apparatus for adjusting an encoding rate according to an embodiment of the present invention;
FIG. 16 is a schematic block diagram of another apparatus for adjusting an encoding rate according to an embodiment of the present invention;
FIG. 17 is a schematic block diagram of another apparatus for adjusting an encoding rate according to an embodiment of the present invention;
FIG. 18 is a schematic block diagram of another apparatus for adjusting an encoding rate according to an embodiment of the present invention; and
FIG. 19 is a schematic block diagram of another apparatus for adjusting an encoding rate according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by persons of ordinary skill in the art based on the embodiments of the present invention without creative efforts shall fall within the protection scope of the present invention.

The technical solutions in the embodiments of the present invention may be applied to various communications systems, such as: a Global System for Mobile Communications (Global System of Mobile communication, "GSM" for short), a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Long Term Evolution (Long Term Evolution, "LTE" for short) system, an LTE frequency division duplex (Frequency Division Duplex, "FDD" for short) system, an LTE time division duplex (Time Division Duplex, "TDD" for short), a Universal Mobile Telecommunications System (Universal Mobile Telecommunication System, "UMTS" for short), a Worldwide Interoperability for Microwave Access (Worldwide Interoperability for Microwave Access, "WiMAX" for short) communications system, or a future 5G system.

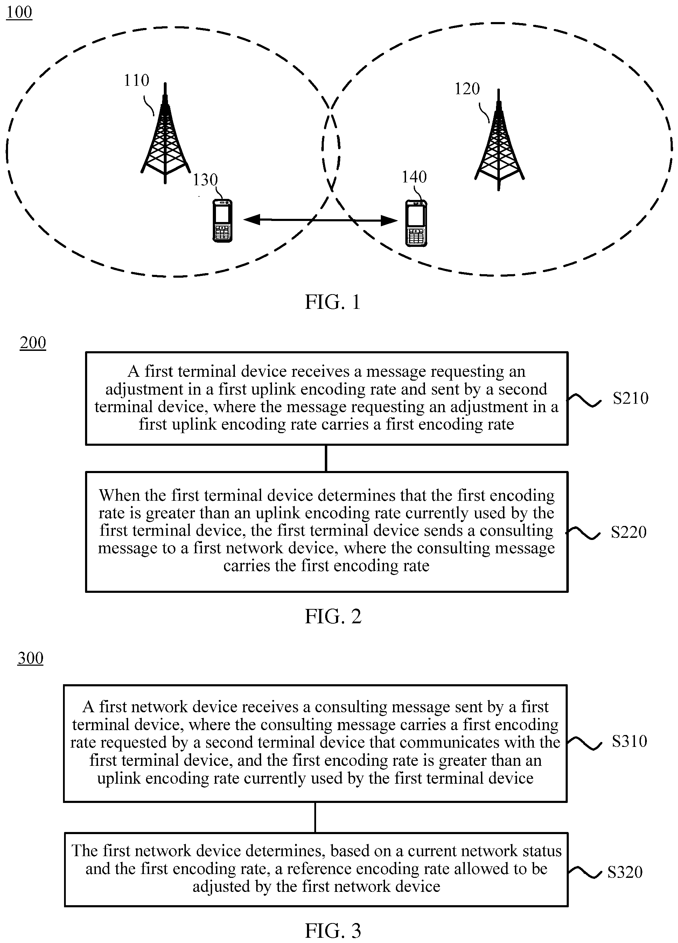

FIG. 1 shows a communications system 100 applied in an embodiment of the present invention. The communications system 100 may at least include a network device 110 and a network device 120. The network device 110 and the network device 120 may each be a device communicating with a terminal device, for example, may each be a base station or a base station controller. Each network device may provide communication coverage for a specific geographic area, and may communicate with a terminal device within the covered area (a cell). The network device 110 and the network device 120 may be a base transceiver station (Base Transceiver Station, "BTS" for short) in a GSM system or a Code Division Multiple Access (Code Division Multiple Access, "CDMA" for short) system, or may be a NodeB (NodeB, "NB" for short) in a WCDMA system, or may further be an evolved NodeB (Evolutional Node B, "eNB" or "eNodeB" for short) in an LTE system, or an access controller in a cloud radio access network (Cloud Radio Access Network, "CRAN" for short), or the network device may be a relay station, an access point, an in-vehicle device, a wearable device, a network side device in a future 5G network or a network device in a future evolved public land mobile network (Public Land Mobile Network, "PLMN" for short), or the like.

The wireless communications system 100 further includes at least one terminal device 130 within a coverage area of the network device 110 and at least one terminal device 140 within a coverage area of the network device 120. The terminal device 130 and the terminal device 140 may be fixed or mobile. The terminal device 130 and the terminal device 140 may be an access terminal, user equipment (User Equipment, "UE" for short), a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a cordless phone, a Session Initiation Protocol (Session Initiation Protocol, "SIP" for short) phone, a wireless local loop (Wireless Local Loop, "WLL" for short) station, a personal digital assistant (Personal Digital Assistant, "PDA" for short), a handheld device having a wireless communication function, a computing device, another processing device connected to a wireless modem, an in-vehicle device, a wearable device, a terminal device in a future 5G network, a terminal device in a future evolved public land mobile network (Public Land Mobile Network, "PLMN" for short), or the like.

In the wireless communications system 100, the terminal device within the coverage area of the network device 110 may communicate with the terminal device within the coverage area of the network device 120, for example, the terminal device 130 and the terminal device 140 may perform wireless voice transmission. For the terminal device 130, the terminal device 140 is a peer device, and the terminal device 130 may be used as a transmit end or may be used as a receive end. Likewise, for the terminal device 140, the terminal device 130 is a peer device, and the terminal device 140 may be used as a transmit end or may be used as a receive end.

FIG. 1 shows an example of two network devices and two terminal devices. Optionally, the communications system 100 may include a plurality of network devices, and another quantity of terminal devices may be included within a coverage area of each network device. This is not limited in this embodiment of the present invention.

Optionally, the wireless communications system 100 may further include another network entity such as a network controller or a mobility management entity. This is not limited in this embodiment of the present invention.

FIG. 2 shows a method for adjusting an encoding rate 200 according to an embodiment of the present invention. The method 200 may be applied to the communications system 100 shown in FIG. 1. However, this is not limited in this embodiment of the present invention.

S210. A first terminal device receives a message requesting an adjustment in a first uplink encoding rate and sent by a second terminal device, where the message requesting an adjustment in a first uplink encoding rate is used to trigger the first terminal device to adjust an uplink encoding rate, the message requesting an adjustment in a first uplink encoding rate carries a first encoding rate, and the second terminal device is a peer device communicating with the first terminal device.

S220. When the first terminal device determines that the first encoding rate is greater than an uplink encoding rate currently used by the first terminal device, the first terminal device sends a consulting message to a first network device, where the consulting message is used to trigger a negotiation of an adjustment in an encoding rate with the first network device, the consulting message carries the first encoding rate, and the first terminal device is within a coverage area of the first network device.

In an optional embodiment, after the first terminal device sends the consulting message to the first network device, the method further includes: receiving, by the first terminal device, a response message sent by the first network device, where the response message carries a reference encoding rate allowed to be adjusted by the first network device; and performing, by the first network device, based on the response message, a rate-increase adjustment on the encoding rate.

In an optional embodiment, the message requesting an adjustment in a first uplink encoding rate is an Implementation Control Protocol RTCP message or a Real-time Transport Protocol-Codec Mode Request RTP CMR message.

In an optional embodiment, the consulting message is a Radio Resource Control RRC message or a Media Access Control-Control Element MAC CE message.

Specifically, signaling exchanged between the terminal device and the network device may be a Radio Resource Control (Radio Resource Control, "RRC" for short) message or may be a layer 2 control message. Specifically, in an LTE system, the layer 2 is a Media Access Control (Media Access Control, "MAC" for short) layer, a Radio Link Control (Radio Link Control, "RLC" for short) layer, and a Packet Data Convergence Protocol (Packet Data Convergence Protocol, "PDCP" for short) layer. Therefore, a corresponding control message may be a Media Access Control-Control Element (Media Access Control-Control Unit, "MAC CE" for short) message, an RLC-control protocol data unit (Protocol Data Unit, "PDU" for short), a PDCP-control PDU, or the like. This is not limited in this embodiment of the present invention.

In addition, the first terminal device and the second terminal device may perform communication by using an application layer message. The application layer message may be an Implementation Control Protocol (Real Time Control Protocol, "RTCP" for short) message, or may be a Real-time Transport Protocol-Codec Mode Request (Real-time Transport Protocol-Codec Mode Request, "RTP CMR" for short) message. In addition to the foregoing messages, the application layer message may further be another message that can carry an encoding rate. This is not limited in this embodiment of the present invention.

Optionally, the first terminal device may send an adjusted rate to the first network device, so that the first network device performs a subsequent rate adjustment based on the value.

Optionally, the first encoding rate may be directly a specific recommended rate value, or may be an index value corresponding to the recommended rate value. This is also not limited in this embodiment of the present invention.

In the prior art, the rate adjustment of the terminal device considers only a link status of a single-side network, and the terminal device, being used as a receive end, once receiving a rate adjustment request sent by the local end or a peer end, triggers an adjustment in an encoding rate, and the terminal device does not comprehensively consider link statuses of two parties during communication, leading to frequent increase and reduce of the encoding rate and affecting user experience.

However, in this embodiment of the present invention, when determining a rate-increase request of the second terminal device based on the received first encoding rate, the first terminal device does not perform the rate-increase adjustment on the encoding rate immediately, but negotiates with the first network device of the local end and comprehensively considers the network statuses of the local link and the peer link before determining whether the rate-increase adjustment needs to be performed on the encoding rate. In this way, a problem of frequent increase and decrease of the encoding rate can be avoided, thereby reducing signaling overheads and improving user experience.

It should be noted that, sequence numbers of the foregoing processes do not indicate an execution sequence, and an execution sequence of processes shall be determined based on functions and internal logic thereof, and shall constitute no limitation on an implementation process of the embodiments of the present invention.

FIG. 3 shows a method for adjusting an encoding rate 300 according to an embodiment of the present invention. The method 300 may be applied to the communications system 100 shown in FIG. 1. However, this is not limited in this embodiment of the present invention.

S310. A first network device receives a consulting message sent by a first terminal device, where the consulting message carries a first encoding rate requested by a second terminal device that communicates with the first terminal device, the first encoding rate is greater than an uplink encoding rate currently used by the first terminal device, the first terminal device is within a coverage area of the first network device, and the second terminal device is a peer device communicating with the first terminal device.

S320. The first network device determines, based on a current network status and the first encoding rate, a reference encoding rate allowed to be adjusted by the first network device.

In an optional embodiment, that the first network device determines, based on a current network status and the first encoding rate, a reference encoding rate allowed to be adjusted by the first network device includes: if the first network device determines, based on the current network status, to accept the first encoding rate, determining, by the first network device, the first encoding rate as the reference encoding rate; or if the first network device determines, based on the current network status, not to accept the first encoding rate, determining, by the first network device, an allowed maximum encoding rate as the reference encoding rate.

In an optional embodiment, after the first network device determines, based on the current network status and the first encoding rate, the reference encoding rate allowed to be adjusted by the first network device, the method further includes: sending, by the first network device, a response message to the first terminal device, where the response message carries the reference encoding rate.

In an optional embodiment, the consulting message is a Radio Resource Control RRC message or a Media Access Control-Control Element MAC CE message.

Specifically, signaling exchanged between the terminal device and the network device may be a Radio Resource Control (Radio Resource Control, "RRC" for short) message or may be a layer 2 control message. Specifically, in an LTE system, the layer 2 is a Media Access Control (Media Access Control, "MAC" for short) layer, a Radio Link Control (Radio Link Control, "RLC" for short) layer, and a Packet Data Convergence Protocol (Packet Data Convergence Protocol, "PDCP" for short) layer. Therefore, a corresponding control message may be a Media Access Control-Control Element (Media Access Control-Control Unit, "MAC CE" for short) message, an RLC-control protocol data unit (Protocol Data Unit, "PDU" for short), a PDCP-control PDU, or the like. This is not limited in this embodiment of the present invention.

In addition, the first terminal device and the second terminal device may perform communication by using an application layer message. The application layer message may be an Implementation Control Protocol (Real Time Control Protocol, "RTCP" for short) message, or may be a Real-time Transport Protocol-Codec Mode Request (Real-time Transport Protocol-Codec Mode Request, "RTP CMR" for short) message. In addition to the foregoing messages, the application layer message may further be another message that can carry an encoding rate. This is not limited in this embodiment of the present invention.

Optionally, the first network device may receive an adjusted rate sent by the first terminal device, so that the first network device performs a subsequent rate adjustment based on the value.

Optionally, the first encoding rate may be directly a specific recommended rate value, or may be an index value corresponding to the recommended rate value. This is also not limited in this embodiment of the present invention.

In this embodiment of the present invention, after the first network device receives the consulting message sent by the first terminal device, the first network device comprehensively considers a network status of the first network device and an encoding rate carried in the consulting message, to determine the reference encoding rate allowed to be adjusted. Therefore, the first terminal device determines, by comprehensively considering the network statuses of the local link and the peer link, whether an uplink adjustment needs to be performed on the encoding rate, so that a problem of frequent increase and decrease of the encoding rate can be avoided, thereby reducing signaling overheads and improving user experience.

It should be noted that, sequence numbers of the foregoing processes do not indicate an execution sequence, and an execution sequence of processes shall be determined based on functions and internal logic thereof, and shall constitute no limitation on an implementation process of the embodiments of the present invention.

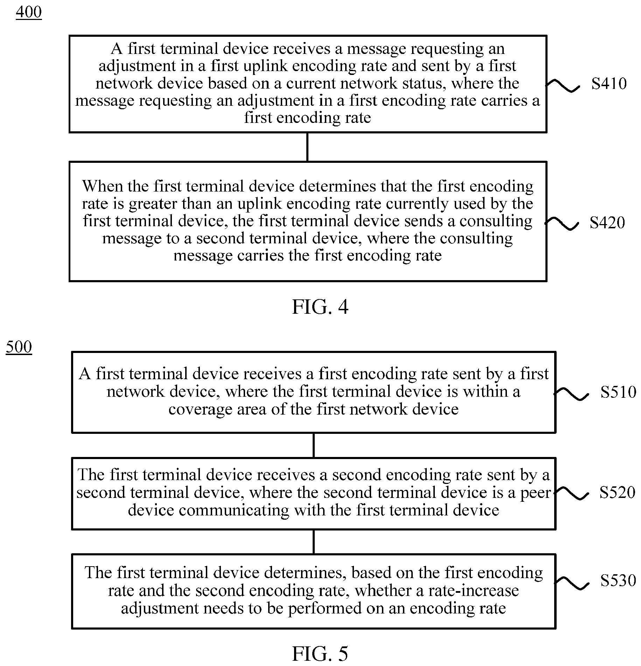

FIG. 4 shows a method for adjusting an encoding rate 400 according to an embodiment of the present invention. The method 400 may be applied to the communications system 100 shown in FIG. 1. However, this is not limited in this embodiment of the present invention.

S410. A first terminal device receives a message requesting an adjustment in a first uplink encoding rate and sent by a first network device based on a current network status, where the message requesting an adjustment in a first uplink encoding rate is used to trigger the first terminal device to adjust an uplink encoding rate, the message requesting an adjustment in a first encoding rate carries a first encoding rate, and the first terminal device is within a coverage area of the first network device.

S420. When the first terminal device determines that the first encoding rate is greater than an uplink encoding rate currently used by the first terminal device, the first terminal device sends a consulting message to the second terminal device, where the consulting message is used to trigger a negotiation of an adjustment in the uplink encoding rate with the second terminal device, the consulting message carries the first encoding rate, and the second terminal device is a peer device communicating with the first terminal device.

In an optional embodiment, after the first terminal device sends the consulting message to the second terminal device, the method further includes: receiving, by the first terminal device, a response message sent by the second terminal device, where the response message carries a reference encoding rate allowed to be adjusted by the second terminal device; and determining, by the first terminal device based on the response message, whether a rate-increase adjustment needs to be performed on an encoding rate.

In an optional embodiment, the message requesting an adjustment in a first uplink encoding rate is a Radio Resource Control RRC message or a Media Access Control-Control Element MAC CE message.

In an optional embodiment, the consulting message is an Implementation Control Protocol RTCP message or a Real-time Transport Protocol-Codec Mode Request RTP CMR message.

Specifically, signaling exchanged between the terminal device and the network device may be a Radio Resource Control (Radio Resource Control, "RRC" for short) message or may be a layer 2 control message. Specifically, in an LTE system, the layer 2 is a Media Access Control (Media Access Control, "MAC" for short) layer, a Radio Link Control (Radio Link Control, "RLC" for short) layer, and a Packet Data Convergence Protocol (Packet Data Convergence Protocol, "PDCP" for short) layer. Therefore, a corresponding control message may be a Media Access Control-Control Element (Media Access Control-Control Unit, "MAC CE" for short) message, an RLC-control protocol data unit (Protocol Data Unit, "PDU" for short), a PDCP-control PDU, or the like. This is not limited in this embodiment of the present invention.

In addition, the first terminal device and the second terminal device may perform communication by using an application layer message. The application layer message may be an Implementation Control Protocol (Real Time Control Protocol, "RTCP" for short) message, or may be a Real-time Transport Protocol-Codec Mode Request (Real-time Transport Protocol-Codec Mode Request, "RTP CMR" for short) message. In addition to the foregoing messages, the application layer message may further be another message that can carry an encoding rate. This is not limited in this embodiment of the present invention.

In this embodiment of the present invention, when determining a rate-increase request of the first network device based on the received encoding rate, the first terminal device does not perform the rate-increase adjustment on the encoding rate immediately, but negotiates with the peer end during the communication, that is, the second terminal device and comprehensively considers the network statuses of the local link and the peer link before determining whether the rate-increase adjustment needs to be performed on the encoding rate. In this way, a problem of frequent increase and decrease of the encoding rate can be avoided, thereby reducing signaling overheads and improving user experience.

It should be noted that, sequence numbers of the foregoing processes do not indicate an execution sequence, and an execution sequence of processes shall be determined based on functions and internal logic thereof, and shall constitute no limitation on an implementation process of the embodiments of the present invention.

FIG. 5 shows a method for adjusting an encoding rate 500 according to an embodiment of the present invention. The method 500 may be applied to the communications system 100 shown in FIG. 1. However, this is not limited in this embodiment of the present invention.

S510. A first terminal device receives a first encoding rate sent by the first network device, where the first terminal device is within a coverage area of the first network device.

S520. The first terminal device receives a second encoding rate sent by a second terminal device, where the second terminal device is a peer device communicating with the first terminal device.

S530. The first terminal device determines, based on the first encoding rate and the second encoding rate, whether a rate-increase adjustment needs to be performed on an encoding rate.

Specifically, the first network device may require, based on a current network status of the first network device, the first terminal device to adjust an encoding rate to a first encoding rate by performing a rate-increase adjustment, and a second network device may require, based on a current network status of the second network device, the second terminal device to adjust an encoding rate to a second encoding rate by performing a rate-increase adjustment. Only after it is determined that the first network device and the second terminal device each need to perform a rate-increase adjustment, the first terminal device can perform a rate-increase adjustment on an encoding rate by comprehensively considering the first encoding rate and the second encoding rate.

It should be understood that, the first terminal device may receive the first encoding rate first or may receive the second encoding rate first. This embodiment of the present invention does not impose any limitation on a sequence of S510 and S520.

Optionally, the first terminal device may send an adjusted rate to the first network device, so that the first network device performs a subsequent rate adjustment based on the value.

Optionally, each of the first encoding rate and the second encoding rate may be directly a specific recommended rate value, or may be an index value corresponding to the recommended rate value. This is also not limited in this embodiment of the present invention.

In this embodiment of the present invention, after receiving the first encoding rate requested by the first network device (or the second encoding rate requested by the second terminal device) and after determining that the first encoding rate is greater than a current encoding rate, the first terminal device does not trigger an adjustment on an encoding rate immediately, but determines, by comprehensively considering the first encoding rate and the second encoding rate after receiving the second encoding rate requested by the second terminal device (or the first encoding rate requested by the first network device) and determining that the second encoding rate is greater than the current encoding rate, a reference encoding rate allowed to be adjusted.

Therefore, according to the method for adjusting an encoding rate in this embodiment of the present invention, the network statuses of the local link and the peer link are comprehensively considered, and the first encoding rate corresponding to the status of the local link and the second encoding rate corresponding to the status of the peer link are received to provide a reference for the first terminal device to perform the rate-increase adjustment on the encoding rate. In this way, a problem of frequent increase and decrease of the encoding rate can be avoided, thereby reducing signaling overheads and improving user experience.

It should be noted that, sequence numbers of the foregoing processes do not indicate an execution sequence, and an execution sequence of processes shall be determined based on functions and internal logic thereof, and shall constitute no limitation on an implementation process of the embodiments of the present invention.

In an optional embodiment, that the first terminal device receives the first encoding rate sent by the first network device includes: receiving, by the first terminal device, the first encoding rate sent by the first network device by using a Radio Resource Control RRC message or a broadcast message, where the first encoding rate is a maximum value of an encoding rate that is determined by the first network device based on a network loading status and that is acceptable for the first network device.

That the first terminal device determines, based on the first encoding rate and the second encoding rate, whether the rate-increase adjustment needs to be performed on the encoding rate includes: after the first terminal device receives the second encoding rate sent by the second terminal device, if the first terminal device determines that the second encoding rate is greater than an uplink encoding rate currently used by the first terminal device, comparing, by the first terminal device, the second encoding rate with the first encoding rate; or if the second encoding rate is less than or equal to the first encoding rate, determining, by the first terminal device, to perform the rate-increase adjustment on the encoding rate.

In an optional embodiment, that the first terminal device determines, based on the first encoding rate and the second encoding rate, whether the rate-increase adjustment needs to be performed on the encoding rate further includes: if the second encoding rate is greater than the first encoding rate, rejecting, by the first terminal device, to perform the rate-increase adjustment on the encoding rate.

Specifically, the first network device may preset a rate threshold, that is, a maximum encoding rate for the first terminal device based on a network status of the first network device, for example, a network loading status. When receiving the second encoding rate requested by the second terminal device, the first terminal device compares the second encoding rate with the maximum encoding rate once finding that the second encoding rate is greater than a currently-used uplink encoding rate. If the second encoding rate is less than or equal to the maximum encoding rate, the first terminal device performs the rate-increase adjustment on the encoding rate. If the second encoding rate is greater than the maximum encoding rate, the first terminal device rejects to perform the rate-increase adjustment on the encoding rate.

In an optional embodiment, that the first terminal device receives the second encoding rate sent by the second terminal device includes: receiving, by the first terminal device during last communication, a message requesting an adjustment in an uplink encoding rate sent by the second terminal device, where the message requesting an adjustment in an uplink encoding rate carries the second encoding rate; and storing, by the first terminal device, the second encoding rate.

That the first terminal device determines, based on the first encoding rate and the second encoding rate, whether the rate-increase adjustment needs to be performed on the encoding rate includes: after the first terminal device receives the first encoding rate sent by the first network device, if the first terminal device determines that the first encoding rate is greater than the uplink encoding rate currently used by the first terminal device, comparing, by the first terminal device, the first encoding rate with the second encoding rate; or if the first encoding rate is less than or equal to the second encoding rate, determining, by the first terminal device, to perform the rate-increase adjustment on the encoding rate.

In an optional embodiment, that the first terminal device determines, based on the first encoding rate and the second encoding rate, whether the rate-increase adjustment needs to be performed on the encoding rate further includes: if the first encoding rate is greater than the second encoding rate, rejecting, by the first terminal device, to perform the rate-increase adjustment on the encoding rate.

Specifically, the first network device may store an encoding rate sent by the second terminal device during the last communication process, and uses the encoding rate as the second encoding rate. When receiving the first encoding rate sent by the first terminal device, the first terminal device compares the first encoding rate with the stored second encoding rate once finding that the first encoding rate is greater than a currently-used uplink encoding rate. If the first encoding rate is less than or equal to the second encoding rate, the first terminal device performs the rate-increase adjustment on the encoding rate. If the first encoding rate is greater than the second encoding rate, the first terminal device rejects to perform the rate-increase adjustment on the encoding rate.

In an optional embodiment, if the first terminal device first receives the first encoding rate sent by the first network device and determines that the first network device requests rate increase, after the first terminal device receives the first encoding rate sent by the first network device, the first terminal device sends a consulting message to the second terminal device, where the consulting message is used to consult for an encoding rate allowed by the second terminal device.

That the first terminal device receives the second encoding rate sent by the second terminal device includes: receiving, by the first terminal device, the second encoding rate sent by the second terminal device after the second terminal device receives the consulting message.

In an optional embodiment, if the first terminal device first receives the second encoding rate sent by the second terminal device and determines that the second terminal device requests rate increase, after the first terminal device receives the second encoding rate sent by the second terminal device, the first terminal device sends a consulting message to the first network device, where the consulting message is used to consult for an encoding rate allowed by the first network device.

That the first terminal device receives the first encoding rate sent by the first network device includes: receiving, by the first terminal device, the first encoding rate sent by the first network device after the first network device receives the consulting message.

Specifically, in this embodiment, after receiving the first encoding rate (or the second encoding rate), the first terminal device may actively request the second encoding rate from the peer device (or request the first encoding rate from a network device to which the first terminal device belongs) without additional waiting, so that time can be saved for a user, thereby improving user experience.

In an optional embodiment, the method further includes: if the first terminal device receives the first encoding rate first, comparing, by the first terminal device when receiving the message requesting an adjustment in a first uplink encoding rate, the first encoding rate with an uplink encoding rate currently used by the first terminal device; and if the first encoding rate is greater than the uplink encoding rate currently used by the first terminal device, starting, by the first terminal device, a timer, and waiting for the message requesting an adjustment in a second uplink encoding rate before the timer expires.

That the first terminal device determines, based on the first encoding rate and the second encoding rate, whether the rate-increase adjustment needs to be performed on the encoding rate includes: if the first terminal device receives the second encoding rate before the timer expires, determining, by the first terminal device based on the first encoding rate and the second encoding rate, whether the rate-increase adjustment needs to be performed on the encoding rate.

In an optional embodiment, that the first terminal device determines, based on the first encoding rate and the second encoding rate, whether the rate-increase adjustment needs to be performed on the encoding rate further includes: if the first terminal device does not receive the second encoding rate before the timer expires, rejecting, by the first terminal device, to perform the rate-increase adjustment on the encoding rate.

In an optional embodiment, the method further includes: if the first terminal device receives the second encoding rate first, comparing, by the first terminal device when receiving the second encoding rate, the second encoding rate with an uplink encoding rate currently used by the first terminal device; and if the second encoding rate is greater than the uplink encoding rate currently used by the first terminal device, starting, by the first terminal device, a timer, and waiting for the first encoding rate before the timer expires.

That the first terminal device determines, based on the first encoding rate and the second encoding rate, whether the rate-increase adjustment needs to be performed on the encoding rate includes: if the first terminal device receives the first encoding rate before the timer expires, determining, by the first terminal device based on the first encoding rate and the second encoding rate, whether the rate-increase adjustment needs to be performed on the encoding rate.

In an optional embodiment, that the first terminal device determines, based on the first encoding rate and the second encoding rate, whether the rate-increase adjustment needs to be performed on the encoding rate further includes: if the first terminal device does not receive the first encoding rate before the timer expires, rejecting, by the first terminal device, to perform the rate-increase adjustment on the encoding rate.

Specifically, in this embodiment, the first terminal device may not actively request for a required encoding rate, but only starts the timer when receiving either of the first encoding rate and the second encoding rate, and waits to receive the other encoding rate. If receiving the other encoding rate before the timer expires, the first terminal device determines, based on the two received encoding rates, whether the rate-increase adjustment needs to be performed on the encoding rate; or if not receiving the other encoding rate before the timer expires, the first terminal device discards the encoding rate that is received first, and does not perform the rate-increase adjustment on the encoding rate.

In an optional embodiment, after the first terminal device determines, based on the first encoding rate and the second encoding rate, whether the rate-increase adjustment needs to be performed on the encoding rate, the method further includes: performing, by the first terminal device, the rate-increase adjustment on the encoding rate; or sending, by the first terminal device, a response message to the second terminal device, where the response message carries a reference encoding rate allowed by the first terminal device.

In an optional embodiment, the first encoding rate is carried in a Radio Resource Control RRC message or a Media Access Control-Control Element MAC CE message.

In an optional embodiment, the second encoding rate is carried in an Implementation Control Protocol RTCP message or a Real-time Transport Protocol-Codec Mode Request RTP CMR message.

Specifically, signaling exchanged between the terminal device and the network device may be a Radio Resource Control (Radio Resource Control, "RRC" for short) message or may be a layer 2 control message. Specifically, in an LTE system, the layer 2 is a Media Access Control (Media Access Control, "MAC" for short) layer, a Radio Link Control (Radio Link Control, "RLC" for short) layer, and a Packet Data Convergence Protocol (Packet Data Convergence Protocol, "PDCP" for short) layer. Therefore, a corresponding control message may be a Media Access Control-Control Element (Media Access Control-Control Unit, "MAC CE" for short) message, an RLC-control protocol data unit (Protocol Data Unit, "PDU" for short), a PDCP-control PDU, or the like. This is not limited in this embodiment of the present invention.

In addition, the first terminal device and the second terminal device may perform communication by using an application layer message. The application layer message may be an Implementation Control Protocol (Real Time Control Protocol, "RTCP" for short) message, or may be a Real-time Transport Protocol-Codec Mode Request (Real-time Transport Protocol-Codec Mode Request, "RTP CMR" for short) message. In addition to the foregoing messages, the application layer message may further be another message that can carry an encoding rate. This is not limited in this embodiment of the present invention.

According to the method for adjusting an encoding rate in this embodiment of the present invention, the network statuses of the local link and the peer link are comprehensively considered, and the first encoding rate corresponding to the status of the local link and the second encoding rate corresponding to the status of the peer link are received to provide a reference for the first terminal device to perform the rate-increase adjustment on the encoding rate. In this way, a problem of frequent increase and decrease of the encoding rate can be avoided, thereby reducing signaling overheads and improving user experience.

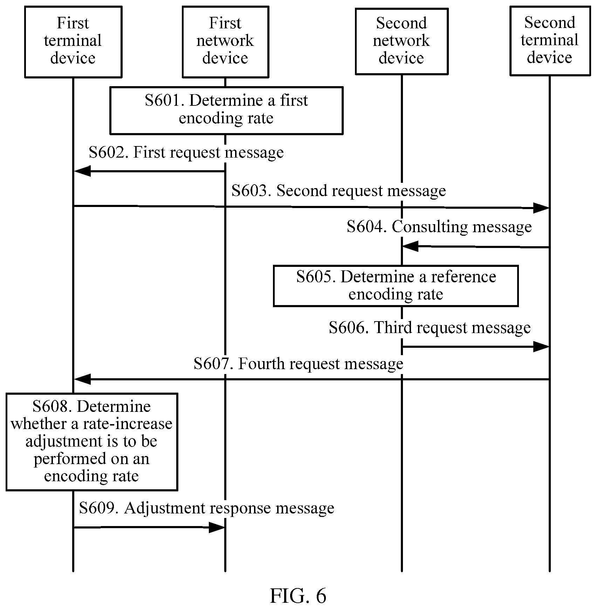

The following describes in detail procedures of specific embodiments of the present invention with reference to FIG. 6 to FIG. 11. In FIG. 6 to FIG. 11, a first terminal device is a transmit end, a second terminal device is a receive end, the first terminal device is within a coverage area of a first network device, and the second terminal device is within a coverage area of a second network device.

FIG. 6 is a schematic flowchart of another method for adjusting an encoding rate 600 according to an embodiment of the present invention.

In S601, a first network device determines, based on a current network status, to adjust an encoding rate in an uplink of a first terminal device. Specifically, the first network device needs to adjust an encoding rate currently used in the uplink of the first terminal device to a first encoding rate by performing a rate-increase adjustment.

In S602, the first network device sends a first request message to the first terminal device, and the first request message carries the first encoding rate, to provide a reference for the first terminal device to perform the rate-increase adjustment on the encoding rate in the uplink.

The first request message may be a Radio Resource Control RRC message, or may be a control message of a layer 2. Specifically, in an LTE system, the layer 2 is a Media Access Control (Media Access Control, "MAC" for short) layer, a Radio Link Control (Radio Link Control, "RLC" for short) layer, and a Packet Data Convergence Protocol (Packet Data Convergence Protocol, "PDCP" for short) layer. Therefore, corresponding control messages may be a MAC CE message, an RLC-control protocol data unit (Protocol Data Unit, "PDU" for short), a PDCP-control PDU, or the like. This is not limited in this embodiment of the present invention.

In S603, the first terminal device receives the first request message, and learns, based on the first encoding rate carried in the first request message, that the first network device requests a rate-increase adjustment on the encoding rate in the uplink, and therefore immediately triggers sending of a second request message to a peer end during communication, that is, a second terminal device, where the second request message carries the first encoding rate, so that the first terminal device performs a negotiation with the second terminal device for the rate-increase adjustment on the encoding rate, and the second request message is a message on a terminal device application layer.

In S604, the second terminal device receives the second request message sent by the first terminal device, learns that the first terminal requests for the rate-increase adjustment on the encoding rate, and therefore sends a consulting message to a second network device to which the second terminal device belongs, where the consulting message carries the first encoding rate, and the consulting message may be an RRC message, or may be a layer 2 control message, for example, a MAC CE.

In S605, the second network device receives the consulting message, and determines, based on a current network status, whether the first encoding rate is allowed to be accepted, to be specific, determines a reference encoding rate allowed to be adjusted, where the reference encoding rate is an encoding rate allowed by the second network device. If the second network device allows the first encoding rate to be accepted, the first encoding rate is determined as the reference encoding rate; or if the second network device cannot accept the first encoding rate, the second network device determines a second encoding rate allowed to be accepted by the second network device, and determines the second encoding rate as the reference encoding rate.

In S606, the second network device sends a third request message to the second terminal device, where the third request message carries the reference encoding rate, and the third request message may be an RRC message, or may be a layer 2 control message, for example, a MAC CE.

In S607, after receiving the third request message, the second terminal device sends, by using an application layer message, a fourth request message that carries the reference encoding rate to the first terminal device.

In S608, after receiving the fourth request message sent by the second terminal device, the first terminal device comprehensively considers the reference encoding rate carried in the fourth request message and the first encoding rate sent by the first network device, to determine whether the rate-increase adjustment needs to be performed on the encoding rate.

In S609, the first terminal device sends an adjustment response message to the first network device, where the adjustment response message carries an encoding rate obtained through adjustment by the first terminal device, and the adjustment response message may be an RRC message, or may be a layer 2 control message, for example, a MAC CE.

It should be noted that, sequence numbers of the foregoing processes do not indicate an execution sequence, and an execution sequence of processes shall be determined based on functions and internal logic thereof, and shall constitute no limitation on an implementation process of the embodiments of the present invention.

According to the method for adjusting an encoding rate in this embodiment of the present invention, the network statuses of the local link and the peer link are comprehensively considered, and whether the rate-increase adjustment needs to be performed on the encoding rate is determined based on encoding rates allowed by the local link and the peer link, so that a problem of frequent increase and decrease of the encoding rate can be avoided, thereby reducing signaling overheads and improving user experience.

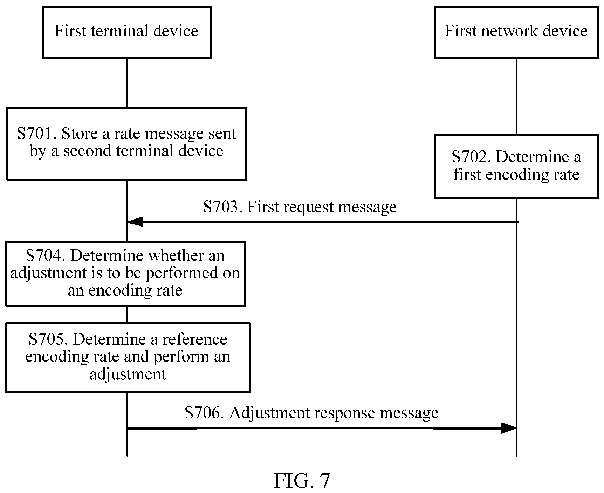

FIG. 7 is a schematic flowchart of another method for adjusting an encoding rate 700 according to an embodiment of the present invention.

In S701, a first terminal device stores rate information carried in an application layer message sent by a second terminal device during a last communication process, and uses the rate information as a second encoding rate.

In S702, a first network device determines, based on a current network status, to adjust an encoding rate in an uplink of the first terminal device. Specifically, the first network device needs to adjust an encoding rate currently used in the uplink of the first terminal device to a first encoding rate by performing a rate-increase adjustment.

In S703, the first network device sends a first request message to the first terminal device, where the first request message carries the first encoding rate, to provide a reference for first terminal device to perform the rate-increase adjustment on the encoding rate, and the first request message may be an RRC message, or may be a layer 2 control message, for example, a MAC CE.

In S704, the first terminal device receives the first request message, and learns, based on the first encoding rate carried in the first request message, that the first network device requests a rate-increase adjustment on an encoding rate, and therefore the first terminal device compares the received first encoding rate with the stored second encoding rate, to determine whether the rate-increase adjustment is allowed to be performed on the encoding rate.

In S705, the first terminal device performs the rate-increase adjustment on the encoding rate.

In S706, the first terminal device sends an adjustment response message to the first network device, where the adjustment response message carries an encoding rate obtained through adjustment by the first terminal device, and the adjustment response message may be an RRC message, or may be a layer 2 control message, for example, a MAC CE.

It should be understood that, if the first encoding rate is less than or equal to the second encoding rate, S705 and S706 are performed; or if the first encoding rate is greater than the second encoding rate, the first terminal device rejects and discards the first request message and does not perform any processing.

It should be further noted that, sequence numbers of the foregoing processes do not indicate an execution sequence, and an execution sequence of processes shall be determined based on functions and internal logic thereof, and shall constitute no limitation on an implementation process of the embodiments of the present invention.

According to the method for adjusting an encoding rate in this embodiment of the present invention, the network statuses of the local link and the peer link are comprehensively considered, and whether the rate-increase adjustment needs to be performed on the encoding rate is determined based on encoding rates allowed by the local link and the peer link, so that a problem of frequent increase and decrease of the encoding rate can be avoided, thereby reducing signaling overheads and improving user experience.

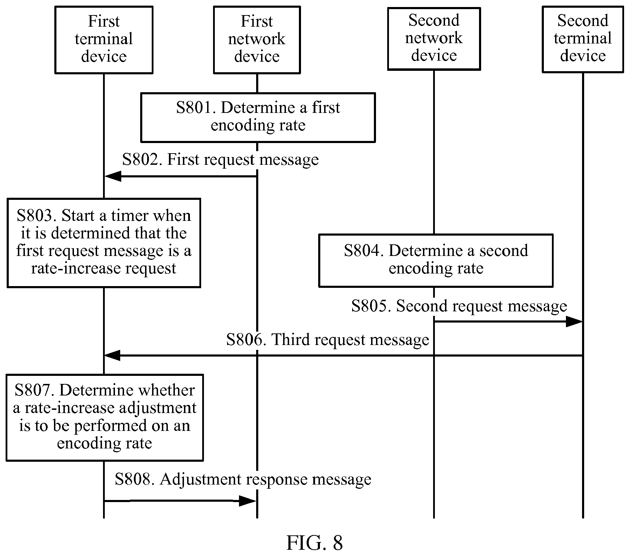

FIG. 8 is a schematic flowchart of another method for adjusting an encoding rate 800 according to an embodiment of the present invention.

In S801, a first network device determines, based on a current network status, to adjust an encoding rate in an uplink of a first terminal device. Specifically, the first network device needs to adjust an encoding rate currently used in the uplink of the first terminal device to a first encoding rate by performing a rate-increase adjustment.

In S802, the first network device sends a first request message to the first terminal device, where the first request message carries the first encoding rate, to provide a reference for the first terminal device to perform the rate-increase adjustment on the encoding rate, and the first request message may be an RRC message, or may be a layer 2 control message, for example, a MAC CE.

In S803, the first terminal device receives the first request message, and learns, based on the first encoding rate carried in the first request message, that the first network device requests a rate-increase adjustment on an encoding rate, and therefore the first terminal device starts a timer, and waits, before the timer expires, for a rate adjustment request sent by a peer end during communication, that is, a second terminal device.

In S804, the second network device determines, based on a current network status, to adjust an encoding rate in a downlink of the second terminal device. Specifically, the second network device determines to adjust an encoding rate currently used in the downlink of the second terminal device to a second encoding rate by performing a rate-increase adjustment.

In S805, the second network device sends a second request message to the second terminal device, where the second request message carries the second encoding rate, and the second request message may be an RRC message, or may be a layer 2 control message, for example, a MAC CE.

In S806, after receiving the second request message, the second terminal device learns, based on the second encoding rate carried in the second request message, that the second network device requests an adjustment in the encoding rate in the downlink, and therefore the second terminal device sends, by using an application layer message a third request message carrying the second encoding rate to the first terminal device.

In S807, the first terminal device receives the third request message, and determines, by comprehensively considering the first encoding rate and the second encoding rate, whether the rate-increase adjustment needs to be performed on the encoding rate.

In S808, the first terminal device sends an adjustment response message to the first network device, where the adjustment response message carries an encoding rate obtained through adjustment by the first terminal device, and the adjustment response message may be an RRC message, or may be a layer 2 control message, for example, a MAC CE.

It should be understood that, if the first terminal device receives, before the timer expires, the application layer message, to be specific, the foregoing third request message, sent by the peer end during the communication, that is, the second terminal device, steps S807 and S808 are performed; or if the first terminal device does not receive, before the timer expires, the application layer message sent by the peer end during the communication, that is, the second terminal device, the first terminal device rejects and discards the first request message and does not perform any processing.

It should be further noted that, sequence numbers of the foregoing processes do not indicate an execution sequence, and an execution sequence of processes shall be determined based on functions and internal logic thereof, and shall constitute no limitation on an implementation process of the embodiments of the present invention.

According to the method for adjusting an encoding rate in this embodiment of the present invention, the network statuses of the local link and the peer link are comprehensively considered, and whether the rate-increase adjustment needs to be performed on the encoding rate is determined based on encoding rates allowed by the local link and the peer link, so that a problem of frequent increase and decrease of the encoding rate can be avoided, thereby reducing signaling overheads and improving user experience.

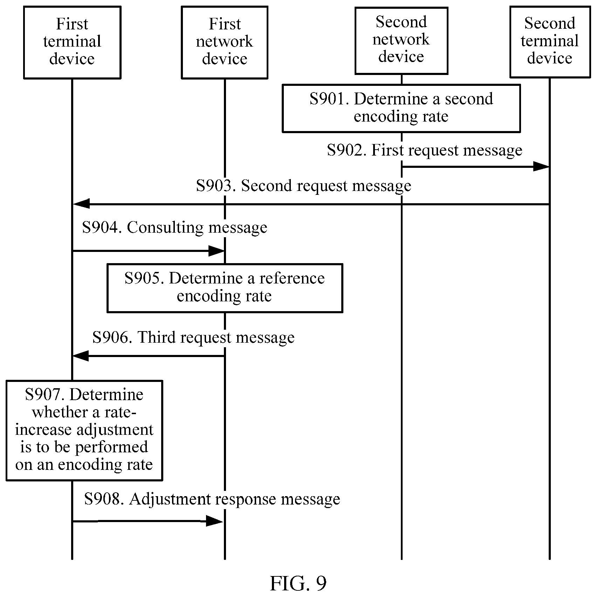

FIG. 9 is a schematic flowchart of another method for adjusting an encoding rate 900 according to an embodiment of the present invention.

In S901, a second network device determines, based on a current network status, to adjust an encoding rate in a downlink of a second terminal device. Specifically, the second network device needs to adjust an encoding rate currently used in the downlink of the second terminal device to a second encoding rate by performing a rate-increase adjustment.

In S902, the second network device sends a first request message to the second terminal device, where the first request message carries the second encoding rate, and the first request message may be an RRC message, or may be a layer 2 control message, for example, a MAC CE.

In S903, the second terminal device receives the first request message, and learns, based on the second encoding rate carried in the first request message, that the second network device requests a rate-increase adjustment on an encoding rate in a downlink, and therefore the second terminal device sends, by using an application layer message, a second request message carrying the second encoding rate to the peer end during the communication, that is, a first terminal device.

In S904, the first terminal device receives the second request message sent by the peer end during the communication, that is, the second terminal device, and learns, based on the second encoding rate carried in the second request message, that the second terminal device requests a rate-increase adjustment on an encoding rate, and therefore the first terminal device sends a consulting message to a first network device to which the first terminal device belongs, where the consulting message carries the second encoding rate, and the consulting message may be an RRC message, or may be a layer 2 control message, for example, a MAC CE.

In S905, the first network device receives the consulting message, and determines, based on a current network status, whether the second encoding rate is allowed to be accepted. If the first network device allows the second encoding rate to be accepted, the second encoding rate is determined to be a reference encoding rate allowed to be adjusted; or if the first network device cannot accept the second encoding rate, the first network device provides a first encoding rate that the first network device allows to accept, and determines the first encoding rate as the reference encoding rate allowed to be adjusted.

In S906, the first network device sends a third request message to the first terminal device, where the third request message carries the reference encoding rate, and the third request message may be an RRC message, or may be a layer 2 control message, for example, a MAC CE.

In S907, the first terminal device receives the third request message, and comprehensively considers the reference encoding rate carried in the third request message and the second encoding rate sent by the second terminal device, to determine whether the rate-increase adjustment needs to be performed on the encoding rate.

In S908, the first terminal device sends an adjustment response message to the first network device, where the adjustment response message carries an encoding rate obtained through adjustment by the first terminal device, and the adjustment response message may be an RRC message, or may be a layer 2 control message, for example, a MAC CE.

It should be noted that, sequence numbers of the foregoing processes do not indicate an execution sequence, and an execution sequence of processes shall be determined based on functions and internal logic thereof, and shall constitute no limitation on an implementation process of the embodiments of the present invention.

According to the method for adjusting an encoding rate in this embodiment of the present invention, the network statuses of the local link and the peer link are comprehensively considered, and whether the rate-increase adjustment needs to be performed on the encoding rate is determined based on encoding rates allowed by the local link and the peer link, so that a problem of frequent increase and decrease of the encoding rate can be avoided, thereby reducing signaling overheads and improving user experience.

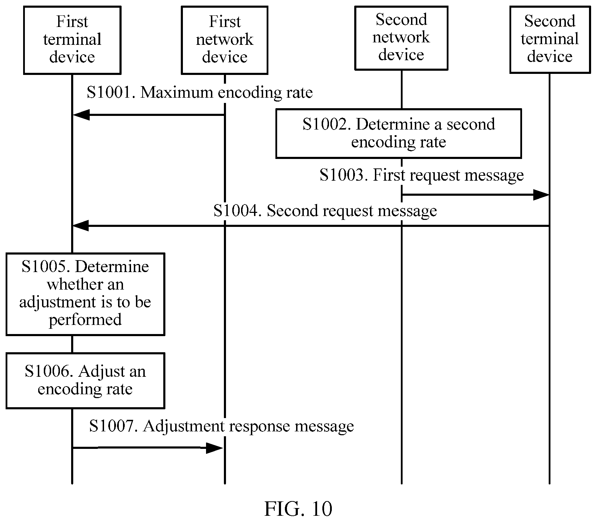

FIG. 10 is a schematic flowchart of another method 1000 for adjusting an encoding rate according to an embodiment of the present invention.

In S1001, a first network device may send a maximum encoding rate to a first terminal device in a broadcast or unicast manner, where the maximum encoding rate is a maximum value that is of an encoding rate in an uplink and that is allowed to be accepted in a network status by the first network device.

In S1002, a second network device determines, based on a current network status, to adjust an encoding rate in a downlink of a second terminal device. Specifically, the second network device needs to adjust an encoding rate currently used in the downlink of the second terminal device to a second encoding rate by performing a rate-increase adjustment.

In S1003, the second network device sends a first request message to the second terminal device, where the first request message carries the second encoding rate, and the first request message may be an RRC message, or may be a layer 2 control message, for example, a MAC CE.

In S1004, the second terminal device receives the first request message, and learns, based on the second encoding rate carried in the first request message, that the second network device requests a rate-increase adjustment on an encoding rate in a downlink, and therefore the second terminal device sends, by using an application layer message, a second request message carrying the second encoding rate to the peer end during the communication, that is, the first terminal device.

In S1005, after receiving the second request message sent by the peer end during the communication, that is, the second terminal device, the first terminal device learns, based on the second encoding rate carried in the second request message, that the second terminal device requests a rate-increase adjustment on an encoding rate, and therefore the first terminal device compares the second encoding rate with the maximum encoding rate sent by the first network device, to determine whether the rate-increase adjustment is allowed to be performed on the encoding rate.

In S1006, the first terminal device performs the rate-increase adjustment on the encoding rate.

In S1007, the first terminal device sends an adjustment response message to the first network device, where the adjustment response message carries an encoding rate obtained through adjustment by the first terminal device, and the adjustment response message may be an RRC message, or may be a layer 2 control message, for example, a MAC CE.

It should be understood that, if the second encoding rate is less than or equal to the maximum encoding rate, S1006 and S1007 are performed; or if the second encoding rate is greater than the maximum encoding rate, the first terminal device rejects and discards the first request message and does not perform any processing.

It should be further noted that, sequence numbers of the foregoing processes do not indicate an execution sequence, and an execution sequence of processes shall be determined based on functions and internal logic thereof, and shall constitute no limitation on an implementation process of the embodiments of the present invention.

According to the method for adjusting an encoding rate in this embodiment of the present invention, the network statuses of the local link and the peer link are comprehensively considered, and whether the rate-increase adjustment needs to be performed on the encoding rate is determined based on encoding rates allowed by the local link and the peer link, so that a problem of frequent increase and decrease of the encoding rate can be avoided, thereby reducing signaling overheads and improving user experience.

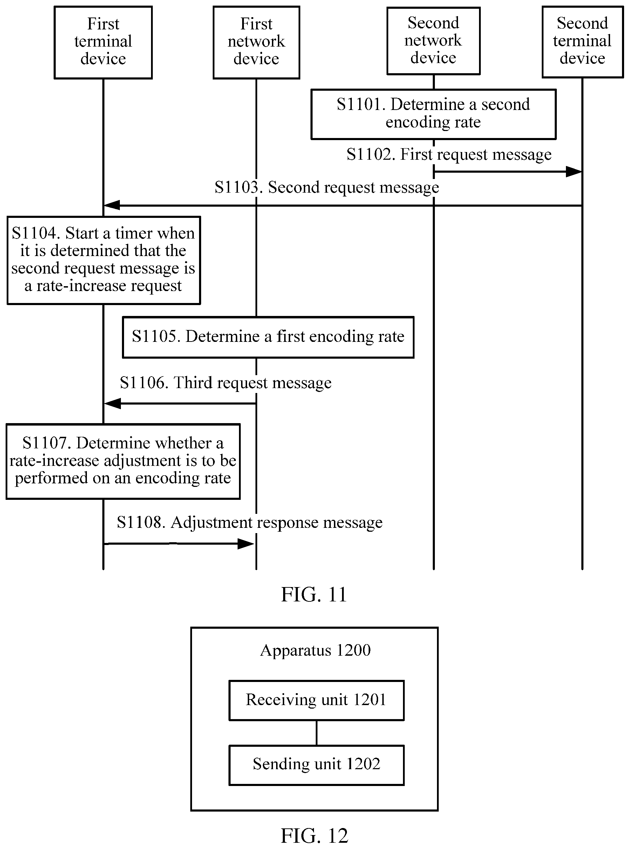

FIG. 11 is a schematic flowchart of another method 1100 for adjusting an encoding rate according to an embodiment of the present invention.

In S1101, a second network device determines, based on a current network status, to adjust an encoding rate in a downlink of a second terminal device. Specifically, the second network device needs to adjust an encoding rate currently used in the downlink of the second terminal device to a second encoding rate by performing a rate-increase adjustment.

In S 1102, the second network device sends a first request message to the second terminal device, where the first request message carries the second encoding rate, and the first request message may be an RRC message, or may be a layer 2 control message, for example, a MAC CE.

In S1103, the second terminal device receives the first request message, and learns, based on the second encoding rate carried in the first request message, that the second network device requests a rate-increase adjustment on an encoding rate in a downlink, and therefore the second terminal device sends, by using an application layer message, a third request message carrying the second encoding rate to the peer end during the communication, that is, a first terminal device.

In S1104, after receiving the third request message sent by the peer end during the communication, that is, the second terminal device, the first terminal device learns, based on the second encoding rate carried in the third request message, that the second terminal device requests a rate-increase adjustment on an encoding rate, and therefore the first terminal device starts a timer, and waits, before the timer expires, for a rate adjustment request sent by a first network device.

In S 1105, the first network device determines, based on a current network status, to adjust an encoding rate in an uplink of the first terminal device. Specifically, the first network device needs to adjust an encoding rate currently used in the uplink of the first terminal device to a first encoding rate by performing a rate-increase adjustment.

In S1106, the first network device sends a third request message to the first terminal device, where the third request message carries the first encoding rate, and the third request message may be an RRC message, or may be a layer 2 control message, for example, a MAC CE.

In S 1107, the first terminal device receives the third request message, and determines, by comprehensively considering the first encoding rate and the second encoding rate, whether the rate-increase adjustment needs to be performed on the encoding rate.

In S1108, the first terminal device sends an adjustment response message to the first network device, where the adjustment response message carries the encoding rate obtained through adjustment by the first terminal device, and the adjustment response message may be an RRC message, or may be a layer 2 control message, for example, a MAC CE.

It should be understood that, if the first terminal device receives, before the timer expires, the third request message sent by the first network device to which the first terminal device belongs, steps S1107 and S1108 are performed; or if the first terminal device does not receive the third request message before the timer expires, the first terminal device rejects and discards a second request message sent by the second terminal device and does not perform any processing.

It should be further noted that, sequence numbers of the foregoing processes do not indicate an execution sequence, and an execution sequence of processes shall be determined based on functions and internal logic thereof, and shall constitute no limitation on an implementation process of the embodiments of the present invention.

According to the method for adjusting an encoding rate in this embodiment of the present invention, the network statuses of the local link and the peer link are comprehensively considered, and whether the rate-increase adjustment needs to be performed on the encoding rate is determined based on encoding rates allowed by the local link and the peer link, so that a problem of frequent increase and decrease of the encoding rate can be avoided, thereby reducing signaling overheads and improving user experience.

The foregoing describes the method for adjusting an encoding rate according to the embodiments of the present invention in detail with reference to FIG. 1 to FIG. 11, and the following describes an apparatus for adjusting an encoding rate according to the embodiments of the present invention in detail with reference to FIG. 12 to FIG. 19.

FIG. 12 shows an apparatus 1200 for adjusting an encoding rate according to an embodiment of the present invention. The apparatus 1200 includes:
a receiving unit 1201, configured to receive a message requesting an adjustment in a first uplink encoding rate and sent by a second terminal device, where the message requesting an adjustment in a first uplink encoding rate is used to trigger the apparatus to adjust an uplink encoding rate, the message requesting an adjustment in a first uplink encoding rate carries a first encoding rate, and the second terminal device is a peer device communicating with the apparatus; and
a sending unit 1202, configured to: when it is determined that the first encoding rate is greater than an uplink encoding rate currently used by the apparatus, send a consulting message to a first network device, where the consulting message is used to trigger a negotiation of an adjustment in an encoding rate with the first network device, the consulting message carries the first encoding rate, and the apparatus is within a coverage area of the first network device.

Optionally, the receiving unit is further configured to:
after the sending a consulting message to a first network device, receive a response message sent by the first network device, where the response message carries a reference encoding rate allowed to be adjusted by the first network device.

The apparatus further includes a judging unit, configured to determine, based on the response message, whether a rate-increase adjustment needs to be performed on an encoding rate.

Optionally, the message requesting an adjustment in a first uplink encoding rate is an Implementation Control Protocol RTCP message or a Real-time Transport Protocol-Codec Mode Request RTP CMR message.

Optionally, the consulting message is a Radio Resource Control RRC message or a Media Access Control-Control Element MAC CE message.

It should be understood that the apparatus 1200 herein is represented in a form of a functional unit. The term "unit" herein may refer to an application-specific integrated circuit (Application Specific Integrated Circuit, ASIC), an electronic circuit, a processor for performing one or more software or firmware programs (for example, a shared processor, a proprietary processor, or a packet processor), a memory, a combined logic circuit, and/or another appropriate component supporting the described function. In an optional example, persons skilled in the art may understand that the apparatus 1200 may be specifically the first terminal device in the foregoing embodiments, and the apparatus 1200 may be configured to perform the procedures and/or steps corresponding to the first terminal device in the foregoing method embodiments. To avoid repetition, details are not described herein again.

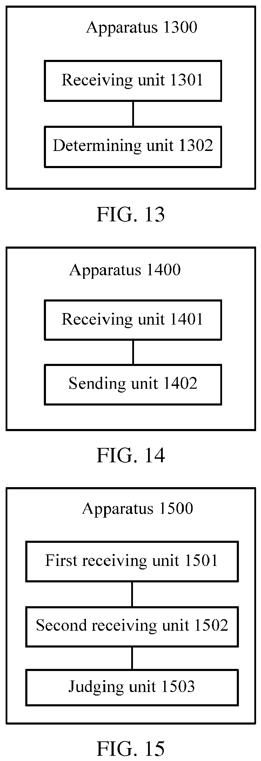

FIG. 13 shows an apparatus 1300 for adjusting an encoding rate according to an embodiment of the present invention. The apparatus 1300 includes:
a receiving unit 1301, configured to receive a consulting message sent by a first terminal device, where the consulting message carries a first encoding rate requested by a second terminal device that communicates with the first terminal device, the first encoding rate is greater than an uplink encoding rate currently used by the first terminal device, the first terminal device is within a coverage area of the apparatus, and the second terminal device is a peer device communicating with the first terminal device; and
a determining unit 1302, configured to determine, based on a current network status and the first encoding rate, a reference encoding rate allowed to be adjusted.

Optionally, the determining unit is specifically configured to:
if determining, based on the current network status, to accept the first encoding rate, determine the first encoding rate as the reference encoding rate; or
if determining, based on the current network status, not to accept the first encoding rate, determine an allowed maximum encoding rate as the reference encoding rate.

Optionally, the apparatus further includes:
a sending unit, configured to: after the reference encoding rate that is allowed to be adjusted is determined based on the current network status and the first encoding rate, send a response message to the first terminal device, where the response message carries the reference encoding rate.

Optionally, the consulting message is a Radio Resource Control RRC message or a Media Access Control-Control Element MAC CE message.

It should be understood that the apparatus 1300 herein is represented in a form of a functional unit. The term "unit" herein may refer to an application-specific integrated circuit (Application Specific Integrated Circuit, ASIC), an electronic circuit, a processor for performing one or more software or firmware programs (for example, a shared processor, a proprietary processor, or a packet processor), a memory, a combined logic circuit, and/or another appropriate component supporting the described function. In an optional example, persons skilled in the art may understand that the apparatus 1300 may be specifically the first network device in the foregoing embodiments, and the apparatus 1300 may be configured to perform the procedures and/or steps corresponding to the first network device in the foregoing method embodiments. To avoid repetition, details are not described herein again.

FIG. 14 shows an apparatus 1400 for adjusting an encoding rate according to an embodiment of the present invention. The apparatus 1400 includes:
a receiving unit 1401, configured to receive a message requesting an adjustment in a first uplink encoding rate and sent by a first network device based on a current network status, where the message requesting an adjustment in a first uplink encoding rate is used to trigger the apparatus to perform an adjustment on an uplink encoding rate, the message requesting an adjustment in a first encoding rate carries a first encoding rate, and the apparatus is within a coverage area of the first network device; and
a sending unit 1402, configured to: when it is determined that the first encoding rate is greater than an uplink encoding rate currently used by the apparatus, send a consulting message to the second terminal device, where the consulting message is used to trigger a negotiation of an adjustment in the uplink encoding rate with the second terminal device, the consulting message carries the first encoding rate, and the second terminal device is a peer device communicating with the apparatus.

Optionally, the receiving unit is further configured to:
after the sending a consulting message to the second terminal device, receive a response message sent by the second terminal device, where the response message carries a reference encoding rate allowed to be adjusted by the second terminal device.

The apparatus further includes a judging unit, configured to determine, based on the response message, whether a rate-increase adjustment needs to be performed on an encoding rate.

Optionally, the message requesting an adjustment in a first uplink encoding rate is a Radio Resource Control RRC message or a Media Access Control-Control Element MAC CE message.

Optionally, the consulting message is an Implementation Control Protocol RTCP message or a Real-time Transport Protocol-Codec Mode Request RTP CMR message.

It should be understood that the apparatus 1400 herein is represented in a form of a functional unit. The term "unit" herein may refer to an application-specific integrated circuit (Application Specific Integrated Circuit, ASIC), an electronic circuit, a processor for performing one or more software or firmware programs (for example, a shared processor, a proprietary processor, or a packet processor), a memory, a combined logic circuit, and/or another appropriate component supporting the described function. In an optional example, persons skilled in the art may understand that the apparatus 1400 may be specifically the first terminal device in the foregoing embodiments, and the apparatus 1400 may be configured to perform the procedures and/or steps corresponding to the first terminal device in the foregoing method embodiments. To avoid repetition, details are not described herein again.

FIG. 15 shows an apparatus 1500 for adjusting an encoding rate according to an embodiment of the present invention. The apparatus 1500 includes:
a first receiving unit 1501, configured to receive a first encoding rate sent by a first network device, where the apparatus is within a coverage area of the first network device;
a second receiving unit 1502, configured to receive a second encoding rate sent by a second terminal device, where the second terminal device is a peer device communicating with the apparatus; and
a judging unit 1503, configured to determine, based on the first encoding rate and the second encoding rate, whether a rate-increase adjustment needs to be performed on an encoding rate.

Optionally, the first receiving unit is specifically configured to:
receive the first encoding rate sent by the first network device by using a Radio Resource Control RRC message or a broadcast message, where the first encoding rate is a maximum value of the encoding rate that is determined by the first network device based on a network loading status and that is acceptable for the first network device.

The judging unit is specifically configured to:
after the receiving a second encoding rate sent by a second terminal device, if it is determined that the second encoding rate is greater than an uplink encoding rate currently used by the apparatus, compare the second encoding rate with the first encoding rate; or if the second encoding rate is less than or equal to the first encoding rate, determine to perform the rate-increase adjustment on the encoding rate.

Optionally, the judging unit is further specifically configured to:
if the second encoding rate is greater than the first encoding rate, reject to perform the rate-increase adjustment on the encoding rate.

Optionally, the second receiving unit is specifically configured to:
receive, during last communication, a message requesting an adjustment in an uplink encoding rate and sent by the second terminal device, where the message requesting an adjustment in an uplink encoding rate carries the second encoding rate; and store the second encoding rate.

The judging unit is specifically configured to:
after the receiving a first encoding rate sent by a first network device, if it is determined that the first encoding rate is greater than the uplink encoding rate currently used by the apparatus, compare the first encoding rate with the second encoding rate; or if the first encoding rate is less than or equal to the second encoding rate, determine to perform the rate-increase adjustment on the encoding rate.

Optionally, the judging unit is further specifically configured to:
if the first encoding rate is greater than the second encoding rate, reject to perform the rate-increase adjustment on the encoding rate.

Optionally, the apparatus further includes:
a control unit, configured to: when the first encoding rate is received first, compare the first encoding rate with an uplink encoding rate currently used by the apparatus; and if the first encoding rate is greater than the uplink encoding rate currently used by the apparatus, start a timer, and wait, before the timer expires, for the message requesting an adjustment in a second uplink encoding rate.

The judging unit is specifically configured to:
if the second encoding rate is received before the timer expires, determine, based on the first encoding rate and the second encoding rate, whether the rate-increase adjustment needs to be performed on the encoding rate.

Optionally, the judging unit is specifically configured to:
if the second encoding rate is not received before the timer expires, reject to perform the rate-increase adjustment on the encoding rate.

Optionally, the control unit is further configured to:
when the second encoding rate is received first, compare the second encoding rate with an uplink encoding rate currently used by the apparatus; and if the second encoding rate is greater than the uplink encoding rate currently used by the apparatus, start a timer, and wait for the first encoding rate before the timer expires.

The judging unit is specifically configured to:
if the first encoding rate is received before the timer expires, determine, based on the first encoding rate and the second encoding rate, whether the rate-increase adjustment needs to be performed on the encoding rate.

Optionally, the judging unit is specifically configured to:
if the first encoding rate is not received before the timer expires, reject to perform the rate-increase adjustment on the encoding rate.

Optionally, the apparatus further includes:
an adjustment unit, configured to: after it is determined, based on the first encoding rate and the second encoding rate, that the rate-increase adjustment needs to be performed on the encoding rate, perform the rate-increase adjustment on the encoding rate; or
a sending unit, configured to send a response message to the second terminal device, where the response message carries a reference encoding rate allowed by the apparatus.

Optionally, the first encoding rate is carried in a Radio Resource Control RRC message or a Media Access Control-Control Element MAC CE message.

Optionally, the second encoding rate is carried in an Implementation Control Protocol RTCP message or a Real-time Transport Protocol-Codec Mode Request RTP CMR message.

It should be understood that the apparatus 1500 herein is represented in a form of a functional unit. The term "unit" herein may refer to an application-specific integrated circuit (Application Specific Integrated Circuit, ASIC), an electronic circuit, a processor for performing one or more software or firmware programs (for example, a shared processor, a proprietary processor, or a packet processor), a memory, a combined logic circuit, and/or another appropriate component supporting the described function. In an optional example, persons skilled in the art may understand that the apparatus 1500 may be specifically the first terminal device in the foregoing embodiments, and the apparatus 1500 may be configured to perform the procedures and/or steps corresponding to the first terminal device in the foregoing method embodiments. To avoid repetition, details are not described herein again.

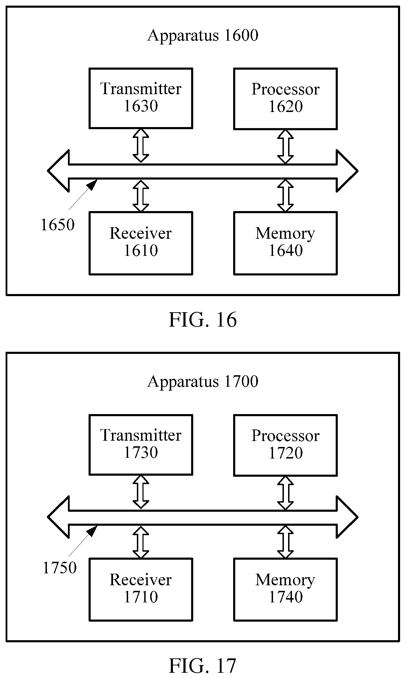

FIG. 16 shows an apparatus 1600 for adjusting an encoding rate according to an embodiment of the present invention. The apparatus 1600 includes a receiver 1610, a processor 1620, a transmitter 1630, a memory 1640, and a bus system 1650. The receiver 1610, the processor 1620, the transmitter 1630, and the memory 1640 are connected to each other by using the bus system 1650. The memory 1640 is configured to store an instruction. The processor 1620 is configured to execute the instruction stored in the memory 1640, to control the receiver 1610 to receive a signal and control the transmitter 1630 to send a signal.

The receiver 1610 is configured to receive a message requesting an adjustment in a first uplink encoding rate and sent by a second terminal device, where the message requesting an adjustment in a first uplink encoding rate is used to trigger the apparatus to adjust an uplink encoding rate, the message requesting an adjustment in a first uplink encoding rate carries a first encoding rate, and the second terminal device is a peer device communicating with the apparatus.

The transmitter 1630 is configured to: when it is determined that the first encoding rate is greater than an uplink encoding rate currently used by the apparatus, send a consulting message to a first network device, where the consulting message is used to trigger a negotiation of an adjustment in an encoding rate with the first network device, the consulting message carries the first encoding rate, and the apparatus is within a coverage area of the first network device.

Optionally, the receiver 1610 is further configured to:
after the sending a consulting message to a first network device, receive a response message sent by the first network device, where the response message carries a reference encoding rate allowed to be adjusted by the first network device.

The processor 1620 is configured to perform a rate-increase adjustment on the encoding rate based on the response message.

Optionally, the message requesting an adjustment in a first uplink encoding rate is an Implementation Control Protocol RTCP message or a Real-time Transport Protocol-Codec Mode Request RTP CMR message.

Optionally, the consulting message is a Radio Resource Control RRC message or a Media Access Control-Control Element MAC CE message.

It should be understood that, the apparatus 1600 may be specifically the first terminal device in the foregoing embodiments, and may be configured to perform the steps and/or procedures corresponding to the first terminal device in the foregoing method embodiments. Optionally, the memory 1640 may include a read-only memory and a random access memory, and provide an instruction and data to the processor. A part of the memory may further include a non-volatile random access memory. For example, the memory may further store information about a device type. The processor 1620 may be configured to execute an instruction stored in the memory, and when the processor executes the instruction, the processor may perform the steps and/or procedures corresponding to the first terminal device in the foregoing method embodiments.

FIG. 17 shows an apparatus 1700 for adjusting an encoding rate according to an embodiment of the present invention. The apparatus 1700 includes a receiver 1710, a processor 1720, a transmitter 1730, a memory 1740, and a bus system 1750. The receiver 1710, the processor 1720, the transmitter 1730, and the memory 1740 are connected to each other by using the bus system 1750. The memory 1740 is configured to store an instruction. The processor 1720 is configured to execute the instruction stored in the memory 1740, to control the receiver 1710 to receive a signal and control the transmitter 1730 to send a signal.

The receiver 1710 is configured to receive a consulting message sent by a first terminal device, where the consulting message carries a first encoding rate requested by a second terminal device that communicates with the first terminal device, the first encoding rate is greater than an uplink encoding rate currently used by the first terminal device, the first terminal device is within a coverage area of the apparatus, and the second terminal device is a peer device communicating with the first terminal device.

The processor 1720 is configured to determine, based on a current network status and the first encoding rate, a reference encoding rate allowed to be adjusted.

Optionally, the processor 1720 is specifically configured to:
if determining, based on the current network status, to accept the first encoding rate, determine the first encoding rate as the reference encoding rate; or
if determining, based on the current network status, not to accept the first encoding rate, determine an allowed maximum encoding rate as the reference encoding rate.

Optionally, the transmitter 1730 is configured to: after the reference encoding rate that is allowed to be adjusted is determined based on the current network status and the first encoding rate, send a response message to the first terminal device, where the response message carries the reference encoding rate.

Optionally, the consulting message is a Radio Resource Control RRC message or a Media Access Control-Control Element MAC CE message.

It should be understood that the apparatus 1700 may be specifically the first network device in the foregoing embodiments, and may be configured to perform the steps and/or procedures corresponding to the first network device in the foregoing method embodiments. Optionally, the memory 1740 may include a read-only memory and a random access memory, and provide an instruction and data to the processor. A part of the memory may further include a non-volatile random access memory. For example, the memory may further store information about a device type. The processor 1720 may be configured to execute an instruction stored in the memory, and when the processor executes the instruction, the processor may perform the steps and/or procedures corresponding to the first network device in the foregoing method embodiments.

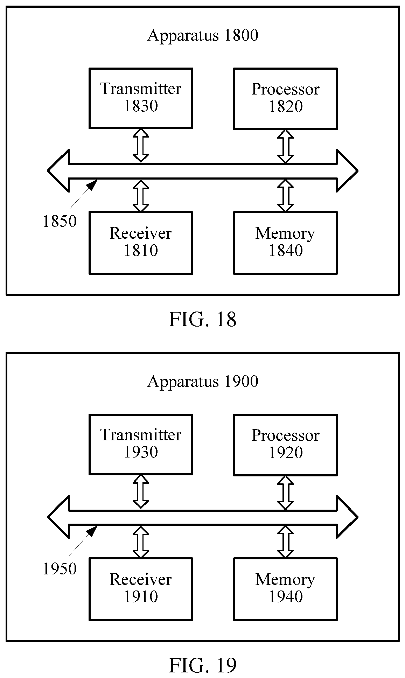

FIG. 18 shows an apparatus 1800 for adjusting an encoding rate according to an embodiment of the present invention. The apparatus 1800 includes a receiver 1810, a processor 1820, a transmitter 1830, a memory 1840, and a bus system 1850. The receiver 1810, the processor 1820, the transmitter 1830, and the memory 1840 are connected to each other by using the bus system 1850. The memory 1840 is configured to store an instruction. The processor 1820 is configured to execute the instruction stored in the memory 1840, to control the receiver 1810 to receive a signal and control the transmitter 1830 to send a signal.

The receiver 1810 is configured to receive a message requesting an adjustment in a first uplink encoding rate and sent by a first network device based on a current network status, where the message requesting an adjustment in a first uplink encoding rate is used to trigger the apparatus to perform an adjustment on an uplink encoding rate, the message requesting an adjustment in a first encoding rate carries a first encoding rate, and the apparatus is within a coverage area of the first network device.

The transmitter 1830 is configured to: when it is determined that the first encoding rate is greater than an uplink encoding rate currently used by the apparatus, send a consulting message to the second terminal device, where the consulting message is used to trigger a negotiation of an adjustment in the uplink encoding rate with the second terminal device, the consulting message carries the first encoding rate, and the second terminal device is a peer device communicating with the apparatus.

Optionally, the receiver 1810 is further configured to: after the sending a consulting message to the second terminal device, receive a response message sent by the second terminal device, where the response message carries a reference encoding rate allowed to be adjusted by the second terminal device.

The processor 1820 is configured to perform a rate-increase adjustment on the encoding rate based on the response message.

Optionally, the message requesting an adjustment in a first uplink encoding rate is a Radio Resource Control RRC message or a Media Access Control-Control Element MAC CE message.

Optionally, the consulting message is an Implementation Control Protocol RTCP message or a Real-time Transport Protocol-Codec Mode Request RTP CMR message.

It should be understood that, the apparatus 1800 may be specifically the first terminal device in the foregoing embodiments, and may be configured to perform the steps and/or procedures corresponding to the first terminal device in the foregoing method embodiments. Optionally, the memory 1840 may include a read-only memory and a random access memory, and provide an instruction and data to the processor. A part of the memory may further include a non-volatile random access memory. For example, the memory may further store information about a device type. The processor 1820 may be configured to execute an instruction stored in the memory, and when the processor executes the instruction, the processor may perform the steps and/or procedures corresponding to the first terminal device in the foregoing method embodiments.

FIG. 19 shows an apparatus 1900 for adjusting an encoding rate according to an embodiment of the present invention. The apparatus 1900 includes a receiver 1910, a processor 1920, a transmitter 1930, a memory 1940, and a bus system 1950. The receiver 1910, the processor 1920, the transmitter 1930, and the memory 1940 are connected to each other by using the bus system 1950. The memory 1940 is configured to store an instruction. The processor 1920 is configured to execute the instruction stored in the memory 1940, to control the receiver 1910 to receive a signal and control the transmitter 1930 to send a signal.

The receiver 1910 is configured to receive a first encoding rate sent by a first network device, where the apparatus is within a coverage area of the first network device.

The receiver 1910 is further configured to receive a second encoding rate sent by a second terminal device, where the second terminal device is a peer device communicating with the apparatus.

The processor 1920 is configured to determine, based on the first encoding rate and the second encoding rate, whether a rate-increase adjustment needs to be performed on an encoding rate.

Optionally, the receiver 1910 is specifically configured to: receive the first encoding rate sent by the first network device by using a Radio Resource Control RRC message or a broadcast message, where the first encoding rate is a maximum value of the encoding rate that is determined by the first network device based on a network loading status and that is acceptable for the first network device.

The processor 1920 is specifically configured to: after the receiving a second encoding rate sent by a second terminal device, if it is determined that the second encoding rate is greater than an uplink encoding rate currently used by the apparatus, compare the second encoding rate with the first encoding rate; or if the second encoding rate is less than or equal to the first encoding rate, determine to perform the rate-increase adjustment on the encoding rate.

Optionally, the processor 1920 is further specifically configured to: if the second encoding rate is greater than the first encoding rate, reject to perform the rate-increase adjustment on the encoding rate.

Optionally, the receiver 1910 is specifically configured to: receive, during last communication, a message requesting an adjustment in an uplink encoding rate and sent by the second terminal device, where the message requesting an adjustment in an uplink encoding rate carries the second encoding rate; and store the second encoding rate.

The processor 1920 is specifically configured to: after the receiving a first encoding rate sent by a first network device, if it is determined that the first encoding rate is greater than the uplink encoding rate currently used by the apparatus, compare the first encoding rate with the second encoding rate; or if the first encoding rate is less than or equal to the second encoding rate, determine to perform the rate-increase adjustment on the encoding rate.

Optionally, the processor 1920 is further specifically configured to: if the first encoding rate is greater than the second encoding rate, reject to perform the rate-increase adjustment on the encoding rate.

Optionally, the processor 1920 is specifically configured to: when the first encoding rate is received first, compare the first encoding rate with an uplink encoding rate currently used by the apparatus; and if the first encoding rate is greater than the uplink encoding rate currently used by the apparatus, start a timer, and wait, before the timer expires, for the message requesting an adjustment in a second uplink encoding rate.

The processor 1920 is further specifically configured to: if the second encoding rate is received before the timer expires, determine, based on the first encoding rate and the second encoding rate, whether the rate-increase adjustment needs to be performed on the encoding rate.

Optionally, the processor 1920 is specifically configured to: if the second encoding rate is not received before the timer expires, reject to perform the rate-increase adjustment on the encoding rate.

Optionally, the processor 1920 is specifically configured to: when the second encoding rate is received first, compare the second encoding rate with an uplink encoding rate currently used by the apparatus; and if the second encoding rate is greater than the uplink encoding rate currently used by the apparatus, start a timer, and wait for the first encoding rate before the timer expires.

The processor 1920 is further specifically configured to: if the first encoding rate is received before the timer expires, determine, based on the first encoding rate and the second encoding rate, whether the rate-increase adjustment needs to be performed on the encoding rate.

Optionally, the processor 1920 is specifically configured to: if the first encoding rate is not received before the timer expires, reject to perform the rate-increase adjustment on the encoding rate.

Optionally, the processor 1920 is further specifically configured to: after it is determined, based on the first encoding rate and the second encoding rate, that the rate-increase adjustment needs to be performed on the encoding rate, perform the rate-increase adjustment on the encoding rate; or
the transmitter 1930 is configured to send a response message to the second terminal device, where the response message carries a reference encoding rate allowed by the apparatus.

Optionally, the first encoding rate is carried in a Radio Resource Control RRC message or a Media Access Control-Control Element MAC CE message.

Optionally, the second encoding rate is carried in an Implementation Control Protocol RTCP message or a Real-time Transport Protocol-Codec Mode Request RTP CMR message.

It should be understood that, the apparatus 1900 may be specifically the first terminal device in the foregoing embodiments, and may be configured to perform the steps and/or procedures corresponding to the first terminal device in the foregoing method embodiments. Optionally, the memory 1940 may include a read-only memory and a random access memory, and provide an instruction and data to the processor. A part of the memory may further include a non-volatile random access memory. For example, the memory may further store information about a device type. The processor 1920 may be configured to execute an instruction stored in the memory, and when the processor executes the instruction, the processor may perform the steps and/or procedures corresponding to the first terminal device in the foregoing method embodiments.

It should be understood that, the processor in the embodiments of the present invention may be a central processing unit (Central Processing Unit, CPU), or may be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general purpose processor may be a microprocessor or the processor may be any conventional processor, or the like.

In an implementation process, each step of the foregoing method may be completed by using an integrated logical circuit of hardware in the processor or an instruction in a form of software. The steps of the methods disclosed with reference to the embodiments of the present invention may be directly performed and completed by means of a hardware processor, or may be performed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory, and the processor executes the instruction in the memory and completes the steps in the foregoing methods in combination with hardware of the processor. To avoid repetition, details are not described herein.

Persons of ordinary skill in the art may be aware that, in combination with the examples described in the embodiments disclosed in this specification, method steps and units may be implemented by electronic hardware, computer software, or a combination thereof. To clearly describe interchangeability between the hardware and the software, the foregoing has generally described steps and compositions of each example according to functions. Whether the functions are performed by hardware or software depends on particular applications and design constraint conditions of the technical solutions. Persons of ordinary skill in the art may use different methods to implement the described functions for each particular application, but it should not be considered that the implementation goes beyond the scope of the present invention.

It may be clearly understood by persons skilled in the art that, for the purpose of convenient and brief description, for a detailed working process of the foregoing system, apparatus, and unit, refer to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between the apparatuses or units may be electrical connections, mechanical connections, or connections in other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The computer software product is stored in a storage medium and includes several instructions for instructing a computer device (which may be a personal computer, a server, a network device, or the like) to perform all or a part of the steps of the methods described in the embodiments of the present invention. The foregoing storage medium includes: any medium that can store program code, such as a USB flash drive, a removable hard disk, a read-only memory (Read-Only Memory, "ROM" for short), a random access memory (Random Access Memory, "RAM" for short), a magnetic disk, or an optical disc.

The foregoing descriptions are merely specific embodiments of the present invention, but are not intended to limit the protection scope of the present invention. Any equivalent modification or replacement readily figured out by persons skilled in the art within the technical scope disclosed in the present invention shall fall within the protection scope of the present invention. Therefore, the protection scope of the present invention shall be subject to the protection scope of the claims.

## Claims

1. A method for adjusting an encoding rate, comprising:
receiving, by a first terminal device, a message requesting an adjustment in a first uplink encoding rate and sent by a second terminal device, wherein the message requesting an adjustment in a first uplink encoding rate is used to trigger the first terminal device to adjust an uplink encoding rate, the message requesting an adjustment in a first uplink encoding rate carries a first encoding rate, and the second terminal device is a peer device communicating with the first terminal device; and
when the first terminal device determines that the first encoding rate is greater than an uplink encoding rate currently used by the first terminal device, sending, by the first terminal device, a consulting message to a first network device, wherein the consulting message is used to trigger a negotiation of an adjustment in an encoding rate with the first network device, the consulting message carries the first encoding rate, and the first terminal device is within a coverage area of the first network device.

2. The method according to claim 1, wherein after the sending, by the first terminal device, a consulting message to a first network device, the method further comprises:
receiving, by the first terminal device, a response message sent by the first network device, wherein the response message carries a reference encoding rate allowed to be adjusted by the first network device; and
determining, by the first network device based on the response message, whether a rate-increase adjustment needs to be performed on an encoding rate.

3. The method according to claim 1 or 2, wherein the message requesting an adjustment in a first uplink encoding rate is an Implementation Control Protocol RTCP message or a Real-time Transport Protocol-Codec Mode Request RTP CMR message.

4. The method according to any one of claims 1 to 3, wherein the consulting message is a Radio Resource Control RRC message or a Media Access Control-Control Element MAC CE message.

5. A method for adjusting an encoding rate, comprising:
receiving, by a first network device, a consulting message sent by a first terminal device, wherein the consulting message carries a first encoding rate requested by a second terminal device that communicates with the first terminal device, the first encoding rate is greater than an uplink encoding rate currently used by the first terminal device, the first terminal device is within a coverage area of the first network device, and the second terminal device is a peer device communicating with the first terminal device; and
determining, by the first network device based on a current network status and the first encoding rate, a reference encoding rate allowed to be adjusted by the first network device.

6. The method according to claim 5, wherein the determining, by the first network device based on a current network status and the first encoding rate, a reference encoding rate allowed to be adjusted by the first network device comprises:
if the first network device determines, based on the current network status, to accept the first encoding rate, determining, by the first network device, the first encoding rate as the reference encoding rate; or
if the first network device determines, based on the current network status, not to accept the first encoding rate, determining, by the first network device, an allowed maximum encoding rate as the reference encoding rate.

7. The method according to claim 5 or 6, wherein after the determining, by the first network device based on a current network status and the first encoding rate, a reference encoding rate allowed to be adjusted by the first network device, the method further comprises:
sending, by the first network device, a response message to the first terminal device, wherein the response message carries the reference encoding rate.

8. The method according to any one of claims 5 to 7, wherein the consulting message is a Radio Resource Control RRC message or a Media Access Control-Control Element MAC CE message.

9. A method for adjusting an encoding rate, comprising:
receiving, by a first terminal device, a message requesting an adjustment in a first uplink encoding rate and sent by a first network device based on a current network status, wherein the message requesting an adjustment in a first uplink encoding rate is used to trigger the first terminal device to adjust an uplink encoding rate, the message requesting an adjustment in a first encoding rate carries a first encoding rate, and the first terminal device is within a coverage area of the first network device; and
when the first terminal device determines that the first encoding rate is greater than an uplink encoding rate currently used by the first terminal device, sending, by the first terminal device, a consulting message to the second terminal device, wherein the consulting message is used to trigger a negotiation of an adjustment in the uplink encoding rate with the second terminal device, the consulting message carries the first encoding rate, and the second terminal device is a peer device communicating with the first terminal device.

10. The method according to claim 9, wherein after the sending, by the first terminal device, a consulting message to the second terminal device, the method further comprises:
receiving, by the first terminal device, a response message sent by the second terminal device, wherein the response message carries a reference encoding rate allowed to be adjusted by the second terminal device; and
determining, by the first terminal device based on the response message, whether a rate-increase adjustment needs to be performed on an encoding rate.

11. The method according to claim 9 or 10, wherein the message requesting an adjustment in a first uplink encoding rate is a Radio Resource Control RRC message or a Media Access Control-Control Element MAC CE message.

12. The method according to any one of claims 9 to 11, wherein the consulting message is an Implementation Control Protocol RTCP message or a Real-time Transport Protocol-Codec Mode Request RTP CMR message.

13. A method for adjusting an encoding rate, comprising:
receiving, by a first terminal device, a first encoding rate sent by a first network device, wherein the first terminal device is within a coverage area of the first network device;
receiving, by the first terminal device, a second encoding rate sent by a second terminal device, wherein the second terminal device is a peer device communicating with the first terminal device; and
determining, by the first terminal device based on the first encoding rate and the second encoding rate, whether a rate-increase adjustment needs to be performed on an encoding rate.

14. The method according to claim 13, wherein the receiving, by a first terminal device, a first encoding rate sent by a first network device comprises:
receiving, by the first terminal device, the first encoding rate sent by the first network device by using a Radio Resource Control RRC message or a broadcast message, wherein the first encoding rate is a maximum value of the encoding rate that is determined by the first network device based on a network loading status and that is acceptable for the first network device; and
the determining, by the first terminal device based on the first encoding rate and the second encoding rate, whether a rate-increase adjustment needs to be performed on an encoding rate comprises:
after the first terminal device receives the second encoding rate sent by the second terminal device, if the first terminal device determines that the second encoding rate is greater than an uplink encoding rate currently used by the first terminal device, comparing, by the first terminal device, the second encoding rate with the first encoding rate; or
if the second encoding rate is less than or equal to the first encoding rate, determining, by the first terminal device, to perform the rate-increase adjustment on the encoding rate.

15. The method according to claim 14, wherein the determining, by the first terminal device based on the first encoding rate and the second encoding rate, whether a rate-increase adjustment needs to be performed on an encoding rate further comprises:
if the second encoding rate is greater than the first encoding rate, rejecting, by the first terminal device, to perform the rate-increase adjustment on the encoding rate.

16. The method according to any one of claims 13 to 15, wherein the receiving, by the first terminal device, a second encoding rate sent by a second terminal device comprises:
receiving, by the first terminal device during last communication, a message requesting an adjustment in an uplink encoding rate and sent by the second terminal device, wherein the message requesting an adjustment in an uplink encoding rate carries the second encoding rate; and
storing, by the first terminal device, the second encoding rate; and
the determining, by the first terminal device based on the first encoding rate and the second encoding rate, whether a rate-increase adjustment needs to be performed on an encoding rate comprises:
after the first terminal device receives the first encoding rate sent by the first network device, if the first terminal device determines that the first encoding rate is greater than the uplink encoding rate currently used by the first terminal device, comparing, by the first terminal device, the first encoding rate with the second encoding rate; or
if the first encoding rate is less than or equal to the second encoding rate, determining, by the first terminal device, to perform the rate-increase adjustment on the encoding rate.

17. The method according to claim 16, wherein the determining, by the first terminal device based on the first encoding rate and the second encoding rate, whether a rate-increase adjustment needs to be performed on an encoding rate further comprises:
if the first encoding rate is greater than the second encoding rate, rejecting, by the first terminal device, to perform the rate-increase adjustment on the encoding rate.

18. The method according to claim 13, wherein the method further comprises:
if the first terminal device receives the first encoding rate first, when receiving the message requesting an adjustment in a first uplink encoding rate, comparing, by the first terminal device, the first encoding rate with an uplink encoding rate currently used by the first terminal device; and
if the first encoding rate is greater than the uplink encoding rate currently used by the first terminal device, starting, by the first terminal device, a timer, and waiting, before the timer expires, for the message requesting an adjustment in a second uplink encoding rate; and
the determining, by the first terminal device based on the first encoding rate and the second encoding rate, whether a rate-increase adjustment needs to be performed on an encoding rate comprises:
if the first terminal device receives the second encoding rate before the timer expires, determining, by the first terminal device based on the first encoding rate and the second encoding rate, whether the rate-increase adjustment needs to be performed on the encoding rate.

19. The method according to claim 18, wherein the determining, by the first terminal device based on the first encoding rate and the second encoding rate, whether a rate-increase adjustment needs to be performed on an encoding rate further comprises:
if the first terminal device does not receive the second encoding rate before the timer expires, rejecting, by the first terminal device, to perform the rate-increase adjustment on the encoding rate.

20. The method according to claim 13, wherein the method further comprises:
if the first terminal device receives the second encoding rate first, when receiving the second encoding rate, comparing, by the first terminal device, the second encoding rate with an uplink encoding rate currently used by the first terminal device; and
if the second encoding rate is greater than the uplink encoding rate currently used by the first terminal device, starting, by the first terminal device, a timer, and waiting for the first encoding rate before the timer expires; and
the determining, by the first terminal device based on the first encoding rate and the second encoding rate, whether a rate-increase adjustment needs to be performed on an encoding rate comprises:
if the first terminal device receives the first encoding rate before the timer expires, determining, by the first terminal device based on the first encoding rate and the second encoding rate, whether the rate-increase adjustment needs to be performed on the encoding rate.

21. The method according to claim 20, wherein the determining, by the first terminal device based on the first encoding rate and the second encoding rate, whether a rate-increase adjustment needs to be performed on an encoding rate further comprises:
if the first terminal device does not receive the first encoding rate before the timer expires, rejecting, by the first terminal device, to perform the rate-increase adjustment on the encoding rate.

22. The method according to any one of claims 13 to 21, wherein after the determining, by the first terminal device based on the first encoding rate and the second encoding rate, whether a rate-increase adjustment needs to be performed on an encoding rate, the method further comprises:
performing, by the first terminal device, the rate-increase adjustment on the encoding rate; or
sending, by the first terminal device, a response message to the second terminal device, wherein the response message carries a reference encoding rate allowed by the first terminal device.

23. The method according to any one of claims 13 to 22, wherein the first encoding rate is carried in a Radio Resource Control RRC message or a Media Access Control-Control Element MAC CE message.

24. The method according to any one of claims 13 to 23, wherein the second encoding rate is carried in an Implementation Control Protocol RTCP message or a Real-time Transport Protocol-Codec Mode Request RTP CMR message.

25. An apparatus for adjusting an encoding rate, comprising:
a receiving unit, configured to receive a message requesting an adjustment in a first uplink encoding rate and sent by a second terminal device, wherein the message requesting an adjustment in a first uplink encoding rate is used to trigger the apparatus to adjust an uplink encoding rate, the message requesting an adjustment in a first uplink encoding rate carries a first encoding rate, and the second terminal device is a peer device communicating with the apparatus; and
a sending unit, configured to: when it is determined that the first encoding rate is greater than an uplink encoding rate currently used by the apparatus, send a consulting message to a first network device, wherein the consulting message is used to trigger a negotiation of an adjustment in an encoding rate with the first network device, the consulting message carries the first encoding rate, and the apparatus is within a coverage area of the first network device.

26. The apparatus according to claim 25, wherein the receiving unit is further configured to:
after the sending a consulting message to a first network device, receive a response message sent by the first network device, wherein the response message carries a reference encoding rate allowed to be adjusted by the first network device; and
the apparatus further comprises:
a judging unit, configured to determine, based on the response message, whether a rate-increase adjustment needs to be performed on an encoding rate.

27. The apparatus according to claim 25 or 26, wherein the message requesting an adjustment in a first uplink encoding rate is an Implementation Control Protocol RTCP message or a Real-time Transport Protocol-Codec Mode Request RTP CMR message.

28. The apparatus according to any one of claims 25 to 27, wherein the consulting message is a Radio Resource Control RRC message or a Media Access Control-Control Element MAC CE message.

29. An apparatus for adjusting an encoding rate, comprising:
a receiving unit, configured to receive a consulting message sent by a first terminal device, wherein the consulting message carries a first encoding rate requested by a second terminal device that communicates with the first terminal device, the first encoding rate is greater than an uplink encoding rate currently used by the first terminal device, the first terminal device is within a coverage area of the apparatus, and the second terminal device is a peer device communicating with the first terminal device; and
a determining unit, configured to determine, based on a current network status and the first encoding rate, a reference encoding rate allowed to be adjusted.

30. The apparatus according to claim 29, wherein the determining unit is specifically configured to:
if determining, based on the current network status, to accept the first encoding rate, determine the first encoding rate as the reference encoding rate; or
if determining, based on the current network status, not to accept the first encoding rate, determine an allowed maximum encoding rate as the reference encoding rate.

31. The apparatus according to claim 29 or 30, wherein the apparatus further comprises:
a sending unit, configured to: after the reference encoding rate that is allowed to be adjusted is determined based on the current network status and the first encoding rate, send a response message to the first terminal device, wherein the response message carries the reference encoding rate.

32. The apparatus according to any one of claims 29 to 31, wherein the consulting message is a Radio Resource Control RRC message or a Media Access Control-Control Element MAC CE message.

33. An apparatus for adjusting an encoding rate, comprising:
a receiving unit, configured to receive a message requesting an adjustment in a first uplink encoding rate and sent by a first network device based on a current network status, wherein the message requesting an adjustment in a first uplink encoding rate is used to trigger the apparatus to perform an adjustment on an uplink encoding rate, the message requesting an adjustment in a first encoding rate carries a first encoding rate, and the apparatus is within a coverage area of the first network device; and
a sending unit, configured to: when it is determined that the first encoding rate is greater than an uplink encoding rate currently used by the apparatus, send a consulting message to the second terminal device, wherein the consulting message is used to trigger a negotiation of an adjustment in the uplink encoding rate with the second terminal device, the consulting message carries the first encoding rate, and the second terminal device is a peer device communicating with the apparatus.

34. The apparatus according to claim 33, wherein the receiving unit is further configured to:
after the sending a consulting message to the second terminal device, receive a response message sent by the second terminal device, wherein the response message carries a reference encoding rate allowed to be adjusted by the second terminal device; and
the apparatus further comprises:
a judging unit, configured to determine, based on the response message, whether a rate-increase adjustment needs to be performed on an encoding rate.

35. The apparatus according to claim 33 or 34, wherein the message requesting an adjustment in a first uplink encoding rate is a Radio Resource Control RRC message or a Media Access Control-Control Element MAC CE message.

36. The apparatus according to any one of claims 33 to 35, wherein the consulting message is an Implementation Control Protocol RTCP message or a Real-time Transport Protocol-Codec Mode Request RTP CMR message.

37. An apparatus for adjusting an encoding rate, comprising:
a first receiving unit, configured to receive a first encoding rate sent by a first network device, wherein the apparatus is within a coverage area of the first network device;
a second receiving unit, configured to receive a second encoding rate sent by a second terminal device, wherein the second terminal device is a peer device communicating with the apparatus; and
a judging unit, configured to determine, based on the first encoding rate and the second encoding rate, whether a rate-increase adjustment needs to be performed on an encoding rate.

38. The apparatus according to claim 37, wherein the first receiving unit is specifically configured to:
receive the first encoding rate sent by the first network device by using a Radio Resource Control RRC message or a broadcast message, wherein the first encoding rate is a maximum value of the encoding rate that is determined by the first network device based on a network loading status and that is acceptable for the first network device; and
the judging unit is specifically configured to:
after the receiving a second encoding rate sent by a second terminal device, if it is determined that the second encoding rate is greater than an uplink encoding rate currently used by the apparatus, compare the second encoding rate with the first encoding rate; or
if the second encoding rate is less than or equal to the first encoding rate, determine to perform the rate-increase adjustment on the encoding rate.

39. The apparatus according to claim 38, wherein the judging unit is further specifically configured to:
if the second encoding rate is greater than the first encoding rate, reject to perform the rate-increase adjustment on the encoding rate.

40. The apparatus according to any one of claims 37 to 39, wherein the second receiving unit is specifically configured to:
receive, during last communication, a message requesting an adjustment in an uplink encoding rate and sent by the second terminal device, wherein the message requesting an adjustment in an uplink encoding rate carries the second encoding rate; and
store the second encoding rate; and
the judging unit is specifically configured to:
after the receiving a first encoding rate sent by a first network device, if it is determined that the first encoding rate is greater than the uplink encoding rate currently used by the apparatus, compare the first encoding rate with the second encoding rate; or
if the first encoding rate is less than or equal to the second encoding rate, determine to perform the rate-increase adjustment on the encoding rate.

41. The apparatus according to claim 40, wherein the judging unit is further specifically configured to:
if the first encoding rate is greater than the second encoding rate, reject to perform the rate-increase adjustment on the encoding rate.

42. The apparatus according to claim 37, wherein the apparatus further comprises:
a control unit, configured to: when the first encoding rate is received first, compare the first encoding rate with an uplink encoding rate currently used by the apparatus; and
if the first encoding rate is greater than the uplink encoding rate currently used by the apparatus, start a timer, and wait, before the timer expires, for the message requesting an adjustment in a second uplink encoding rate; and
the judging unit is specifically configured to:
if the second encoding rate is received before the timer expires, determine, based on the first encoding rate and the second encoding rate, whether the rate-increase adjustment needs to be performed on the encoding rate.

43. The apparatus according to claim 42, wherein the judging unit is specifically configured to:
if the second encoding rate is not received before the timer expires, reject to perform the rate-increase adjustment on the encoding rate.

44. The apparatus according to claim 37, wherein the control unit is further configured to:
when the second encoding rate is received first, compare the second encoding rate with an uplink encoding rate currently used by the apparatus; and
if the second encoding rate is greater than the uplink encoding rate currently used by the apparatus, start a timer, and wait for the first encoding rate before the timer expires; and
the judging unit is specifically configured to:
if the first encoding rate is received before the timer expires, determine, based on the first encoding rate and the second encoding rate, whether the rate-increase adjustment needs to be performed on the encoding rate.

45. The apparatus according to claim 44, wherein the judging unit is specifically configured to:
if the first encoding rate is not received before the timer expires, reject to perform the rate-increase adjustment on the encoding rate.

46. The apparatus according to any one of claims 37 to 45, wherein the apparatus further comprises:
an adjustment unit, configured to: after it is determined, based on the first encoding rate and the second encoding rate, that the rate-increase adjustment needs to be performed on the encoding rate, perform the rate-increase adjustment on the encoding rate; or
a sending unit, configured to send a response message to the second terminal device, wherein the response message carries a reference encoding rate allowed by the apparatus.

47. The apparatus according to any one of claims 37 to 46, wherein the first encoding rate is carried in a Radio Resource Control RRC message or a Media Access Control-Control Element MAC CE message.

48. The apparatus according to any one of claims 37 to 47, wherein the second encoding rate is carried in an Implementation Control Protocol RTCP message or a Real-time Transport Protocol-Codec Mode Request RTP CMR message.
